# EUROPEAN PATENT APPLICATION

(11) **EP 4 813 204 A1**
(43) Date of publication of application: **30.09.2026**
(21) Application number: 26167742.1
(22) Date of filing: 25.03.2026
(51) Int. Cl.: A01K 39/012

(54) **IMPROVEMENTS RELATING TO POULTRY FEEDERS**

(30) Priority: 25.03.2025 GB 202504373
(71) Applicant: Hebe Studio Limited, Banbury, Oxfordshire OX16 5HX (GB)
(72) Inventor: WATSON, Charles, Banbury, OX16 5HX (GB); WORTHINGTON, Alex, Banbury, OX16 5HX (GB); BEADLE, Tom, Banbury, OX16 5HX (GB); WARD-THOMAS, Daniel, Banbury, OX16 5HX (GB); ROSE, Finn, Banbury, OX16 5HX (GB)
(74) Representative: Milhench, Mark Lorne

(57) **Abstract**

A poultry feeder 100 comprising: a store for feed, said store comprising a feeding port for enabling poultry to access feed provided in said store, and a door 102 moveable between a first position where said feeding port is open and a second position where the feeding port is closed by the door, the feeder further comprising a motor 124 that is coupled to said door, and a control system 110 operable to control the motor to move the door between said first and second positions to open and close the feeding port in the store.

## Description

### Field

This disclosure is concerned with improvements to poultry feeders - particularly but not exclusively to poultry feeders for use by the general public, for example those involved in rearing or caring for poultry (e.g. chickens) at home.

Although aspects of this disclosure are concerned with feeders for supplying solid food to poultry, it should be noted that the word "feeder" is intended to encompass a device for providing anything that might provide sustenance to poultry, whether solid or liquid.

This disclosure refers to a number of different improvements, each of which may be employed with any other improvement disclosed herein. The improvements disclosed below refer to two poultry feeders, a so-called Lo-fi feeder and a SmartFeeder that are each available from Omlet Ltd. Whilst the improvements disclosed below are particularly applicable to the aforementioned Omlet feeders, it will be appreciated that these improvements may readily be applied to other feeders, and not necessarily only those available from Omlet Ltd. It will also be appreciated that improvements disclosed below in connection with the Lo-fi feeder may equally well be applied to the SmartFeeder, and vice versa.

### Background

A variety of different poultry feeders have previously been proposed. Of these, many exhibit significant drawbacks. For example, some previously proposed feeders are configured so that poultry can rake food from the feeder and onto the ground, which can then cause problems with vermin. Other previously proposed feeders have been configured in such a way that birds at the feeder are visible to, and hence can be bullied by, other birds. Another drawback associated with other feeders is that as access to feed within the feeder is unrestricted, vermin can be attracted to the feeder during the evening or night.

Yet further previously proposed feeders suffer from drawbacks associated with the fact that it can be difficult to easily ascertain, without closely inspecting the feeder, how much feed is in the feed and whether the feeder needs to be refilled. Other previously proposed feeders are configured in such a way that the orientation of the feeder is fixed and cannot easily be changed.

Aspects of the present disclosure have been devised with at least some of the foregoing drawbacks in mind.

### Summary

One aspect of this disclosure provides a poultry feeder comprising: a store for feed, said store comprising a feeding port for enabling poultry to access feed provided in said store, and a door moveable between a first position where said feeding port is open and a second position where the feeding port is closed by the door, the feeder further comprising a motor that is coupled to said door, and a control system operable to control the motor to move the door between said first and second positions to open and close the feeding port in the store.

In one implementation the store may comprise a plurality of feeding ports and a plurality of moveable doors, each said port being closable by a said door, said feeder further comprising an elevator linkage assembly coupling the motor to each of said plurality of moveable doors.

The control system may be operable to control the motor to operate the elevator linkage assembly to move substantially simultaneously all of said plurality of doors between said first and second positions to open and close the feeding ports in the store.

The poultry feeder may comprise first and second limit switches that are each configured to signal the control system to cease operation of the motor if actuated. The first limit switch may be associated with a position of the elevator linkage assembly in which the doors coupled to the elevator linkage assembly are closed. The second limit switch may be associated with a position of the elevator linkage assembly in which the doors coupled to the elevator linkage assembly are open.

In one implementation the elevator linkage assembly may comprise a central hub and a plurality of arms, one for each said door, that extend radially outwardly from said central hub to form a spider-like body. The motor may be coupled to said elevator linkage assembly by means of a worm drive that can be driven by the motor to raise and lower the central hub of said elevator linkage assembly. An end region of each arm remote from said central hub may be pivotally coupled to a linkage that connects the arm to a said door.

In one implementation each door may comprise a door panel that is coupled to a mounting rib by a two-part frangible coupling, said mounting rib being pivotally coupled to the linkage that connects the door to the arm.

The control system may comprise a processor, and a communications interface for the receipt of instructions and/or the output of data, said processor being configured to execute software to control operation of the feeder.

The control system may comprise a light sensor operable to generate light level signals representative of ambient light levels at the feeder's location. The processor may be operable to automatically control the motor to open the doors of the feeder at a desired ambient light level and to close the doors at a desired ambient light level based on light level signals received from the light sensor. The processor may be operable to automatically open/close the doors at any one or more of: preset times/days/dates, for preset time intervals, at preset light levels, in response to manual operation of a user interface, and in response to instructions received wirelessly from a computing device.

The feeder may further comprise a level sensor, such as an optical or sonic level sensor, that is operable to output level sensor signals that vary according to the amount of feed within the feeder, said processor being configured to receive said level sensor signals and, based on said level sensor signals, generate an indication of the amount of feed within the feeder.

The processor may be configured to implement crush detector functionality to reduce the likelihood of poultry being caught in a closing door by monitoring a drive current drawn by the motor and ceasing operation of the motor to close the door in the event that the drive current should spike.

The feed store may comprise a hopper for receiving a supply of feed, a funnel in fluid communication with the hopper for the receipt of feed from the hopper, and a base in which the funnel is located, the base co-operating with the funnel to define a plurality of feed areas, each said feed area being associated with and accessible via a said feeding port

In one arrangement, distal end regions of the funnel in each said feed area that are proximate the base may be flared in a radially outward direction to form an angular flange that extends away from the distal end region of the funnel towards the feeding port associated with that feed area, the flange being operable to obstruct poultry from reaching into the funnel to pull feed from within the funnel into said feed area. **In** another arrangement each said feeding port may be defined in part by a radially inwardly extending cowl, a portion of the cowl that is lowermost in use forming a lip that extends inwardly towards the funnel, said lip being operable to obstruct poultry from raking feed from the feed area and out of the feeding port.

Other advantages and aspects of the arrangements disclosed herein will be apparent from the detailed description provided below.

### Brief Description of the Drawings

The teachings of this disclosure, and arrangements embodying those teachings, will hereafter be described by way of illustrative example with reference to the accompanying drawings, in which:
Fig 1 is a schematic front elevation of a lo-fi feeder on a stand;
Fig. 2 is a schematic representation of the feeder shown in fig. 1 that is configured for being suspended from a support;
Fig. 3 is an exploded schematic view of the lo-fi feeder;
Fig 4 is a schematic cross-sectional view through a lo-fi feeder and stand along the line A-A of Fig. 1
Fig. 5 is a schematic perspective view of a feeder and stand in which the two components are depicted as being separated from one another;
Figs. 6 and 7 depict front elevations of a feeder containing differing amounts of feed;
Fig 8 depicts an enlarged view of a part of the base shown within the dashed box labelled B in Fig. 4;
Fig. 9 shows the same area as that shown in Fig. 8, but with a rain hood removed;
Figs. 10, 11 and 12 depict, respectively, a front perspective view, a right side elevation and a rear perspective view of a rain hood;
Fig. 13 depicts a perspective view of the feeder with a lid separated from a hopper of the feeder;
Figs. 14 to 16 are, respectively, a top plan view of a lid, a side elevation of the lid, and an underside plan view of the lid;
Figs. 17 is an isometric view of the feeder and Fig. 18a is an enlarged view of the portion of Fig. 17 that is within the dashed circle labelled "D";
Figs. 19 is an isometric view of the feeder and Fig. 20 is an enlarged view of the portion of Fig. 19 within the dashed circle labelled "F";
Fig. 21 is a cross-sectional view through the hopper and lid with the handle in a position roughly midway between the handle positions shown in Figs. 17 and 19;
Fig. 22 and 23 are schematic front elevations of a SmartFeeder, Fig. 22 shows the SmartFeeder with feeding port doors open, and Fig. 23 shows the SmartFeeder with feeding port doors closed;
Fig. 24 depicts the SmartFeeder configured for hanging from a support;
Fig. 25 is an exploded view of the SmartFeeder;
Fig. 26 is a part-sectional view of the SmartFeeder showing various components thereof;
Fig. 27 is a schematic representation of a transparent panel in the hopper of the SmartFeeder;
Fig. 28 is a schematic representation of a control system for the SmartFeeder;
Fig. 29 is a schematic cross-sectional view through a hopper, funnel and base of a SmartFeeder showing a preferred location for a level sensor;
Fig. 30 depicts a mounting rib and an associated door panel;
Fig. 31 shows the rib press-fitted to the door panel;
Figs. 32 and 33 are a schematic representations of an elevator linkage assembly of the SmartFeeder;
Fig. 34 is a photograph of the underside of the SmartFeeder, and
Fig. 35 is a photograph of the underside of the SmartFeeder with a base component removed.

### Detailed Disclosure

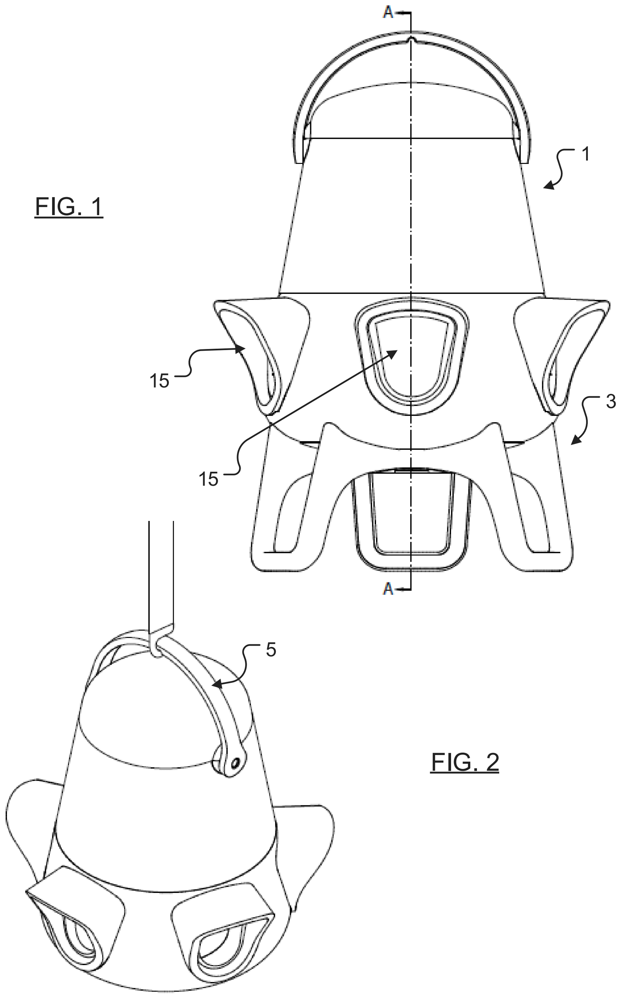

With the above provisos in mind, reference will now be made to Fig 1 of the accompanying drawings in which there is provided a schematic front elevation of a lo-fi feeder 1 on a stand 3, in this particular case a lo-fi feeder with five feeding ports 15 (two of which are not visible). Other contemplated Lo-fi feeders have a greater or lesser number of feeding ports. For example, a smaller capacity feeder might have three feeding ports, and a larger capacity feeder might have more than 5 ports. As will be appreciated, the feeding ports enable poultry to access the inside of the feeder, and any feed provided therein.

The lo-fi feeder can be employed as a free-standing feeder by placing it on the stand (as shown in Fig 1), or - as shown in Fig. 2 - it can be suspended (for example from the roof of a cage) by connecting a rope to a handle 5 that is coupled to the feeder. In this example the stand is a tripod with three legs, but it will be appreciated that a larger or smaller number of legs may instead be provided if desired. As such, in a first implementation of the teachings of this disclosure, there is provided a poultry feeder that is configured so that it can either be hung from a support or mounted on a stand. In this arrangement, the feeder may have a handle pivotally attached to the feeder so that the feeder can be hung from a support by a rope, for example, attached to the handle. Lifting the feeder off the ground, either by suspending the feeder or mounting it on the stand, makes it more difficult for vermin to access the feed in the feeder. **In** a preferred arrangement, the stand is sized so that the feeding ports are raised to a height where poultry can comfortably place their heads inside the feeder to access feed. At such a height, it is advantageously more difficult for poultry to place their feet into the feeder in order to rake feed from it.

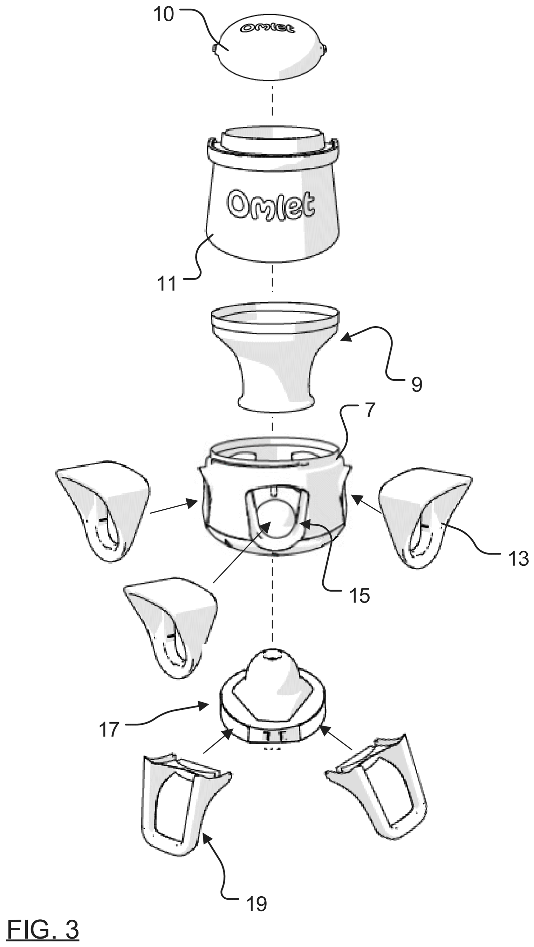

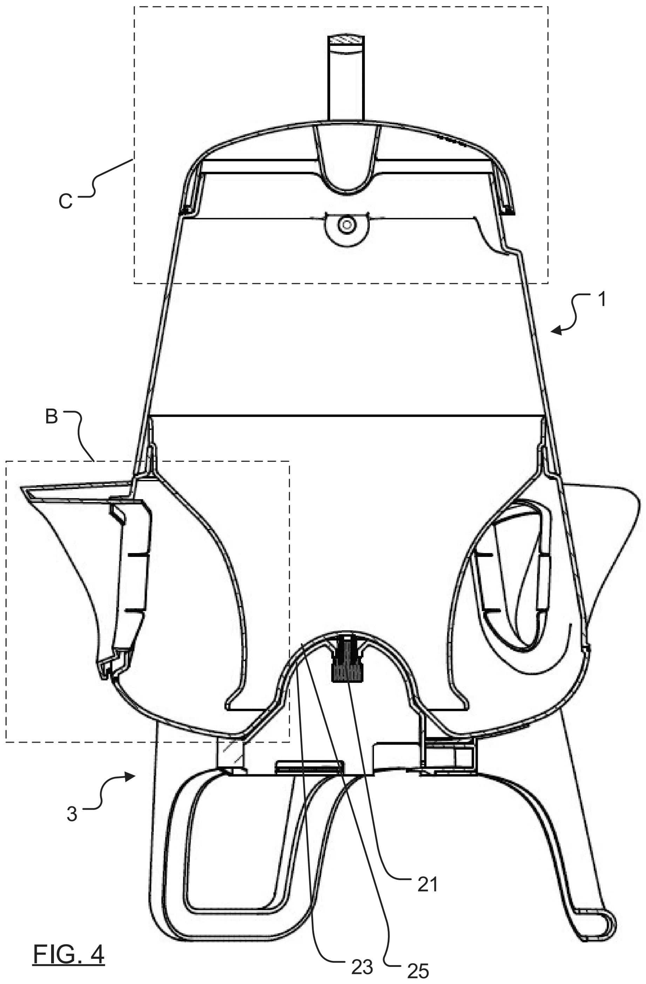

Fig. 3 is an exploded schematic view of the lo-fi feeder. The feeder comprises a base 7, and a funnel 9 that is fitted into the base 7. Once the funnel 9 has been inserted into the base 7, a hopper 11 is fitted over a projecting rim of the funnel 9 and then coupled to the base 7. A lid 10 can then be fitted to the hopper. Five rain hoods 13 (three of which are shown) are provided, and fitted (for example, snap fitted) into five feeding ports 15 provided in the base 7. The stand comprises a stand hub 17, and three stand legs 19 (two of which are shown) that are fitted to the stand centre (for example, snap fitted). Although the feeder is stable when placed on the stand, a fixing 21 (shown in Fig. 4) may optionally be utilised to couple the stand, once assembled, to the base.

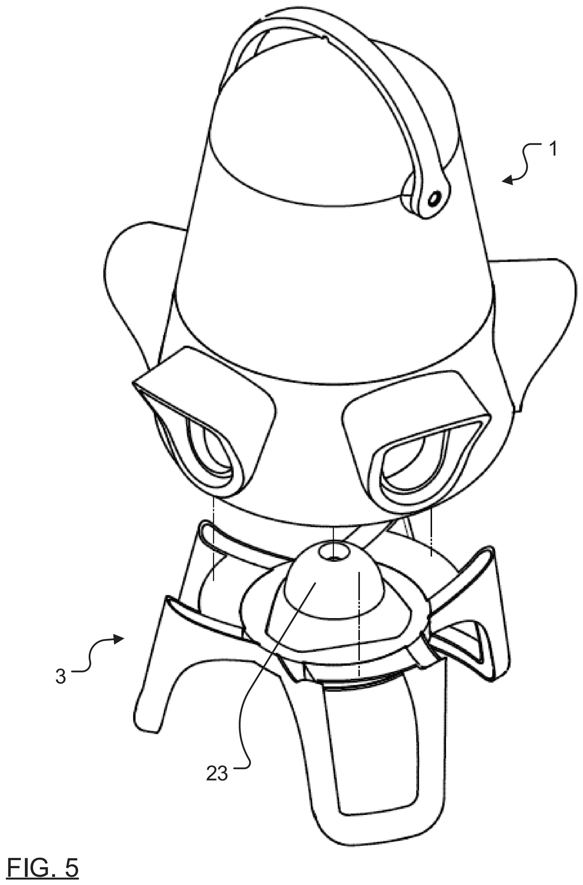

Fig 4 is a schematic cross-sectional view through the feeder and stand along the line A-A of Fig. 1, and Fig. 5 is a schematic perspective view of the feeder and stand in which the two components are depicted as being separated from one another.

Referring to Figs. 4 and 5, the stand 3 includes a first part 23 of a two-part locating system, and the base 7 of the feeder 1 includes a second part 25 of that locating system. The first and second parts of the locating system are complementary, by which we mean that they are sufficiently similarly shaped that they can fit together to locate the feeder on the stand.

In this particular arrangement, the first part 23 comprises a domed surface of the stand hub 17 that projects away from the hub 17 and legs 19. The second part 25 of the locating system comprises a domed recess in the base 7 of the feeder 1 that is shaped to accept the domed surface of the stand hub 17, for example to have a shape that is the inverse of that of the stand hub domed surface.

A particular advantage of this arrangement is that with the fixing 21 removed, the feeder can easily be lifted off the stand (for example, for refilling) without having to move the stand. Another advantage is that the feeder can be replaced on the stand in any orientation - by which we mean that when in place on the stand, the feeder can be spun through a full 360 degrees to any selected orientation relative to the stand.

As will be appreciated, by virtue of this simple locating system the feeder can much more easily be mounted on the stand in low light levels than it could be if there were complex complementary features that had to be interengaged to mount the feeder on the stand. The feeder can also be coupled to the stand in any desired orientation.

In summary, in one implementation of the teachings of this disclosure there is provided a poultry feeder and a stand, the feeder including a first part of a two-part locating system, and the stand including a second part of said two-part locating system, wherein the first and second parts of said locating system have shapes that are complementary to one another so that the two parts of said locating system can be mated together, the locating system being configured so that the feeder can be rotated through 360 degrees to any desired orientation relative to the stand when the feeder is supported on the stand with the first and second parts of the two-part locating system mated together.

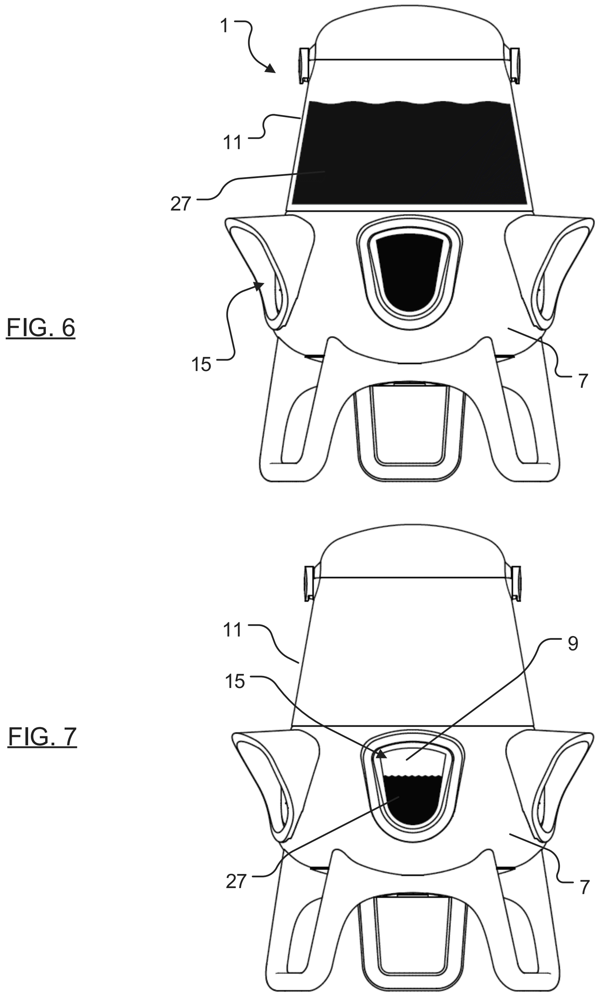

Referring now to Figs. 6 and 7 (which show front elevations of a feeder containing differing amounts of feed), in a preferred implementation of the teachings of this disclosure the hopper 11 and the funnel 9 are at least translucent. **In** other words, the hopper 11 and the funnel 9 are sufficiently see-through to enable the amount of feed 27 within the feeder to be visually determined, even when - as depicted in Fig. 7 - the level of feed has dropped below the junction between the hopper 11 and base 7. In this instance, the level of feed can be ascertained by looking at the funnel through the feeding ports 15 in the base.

A particular advantage of this arrangement is that the amount of feed in the feeder can readily and quickly be determined from a distance, without having to open the feeder - and potentially without even having to go into a poultry enclosure in which the feeder is located.

Although in the preferred arrangement both the hopper and funnel are at least translucent, it will be appreciated that it would still be advantageous if only the hopper was at least translucent. To this end, in this implementation of the teachings of this disclosure there is provided a poultry feeder comprising a base, and a hopper mountable on the base for receiving feed, wherein the hopper is at least translucent in order that the amount of feed within the hopper can be visually determined - preferably without having to open the hopper. In this arrangement, the poultry feeder may further comprise a funnel receivable within the base, the funnel being arranged relative to said hopper so that feed can flow from the hopper into the funnel, wherein said funnel is at least translucent in order that the amount of feed within the funnel can be visually determined (for example through a feeding port provided in the base).

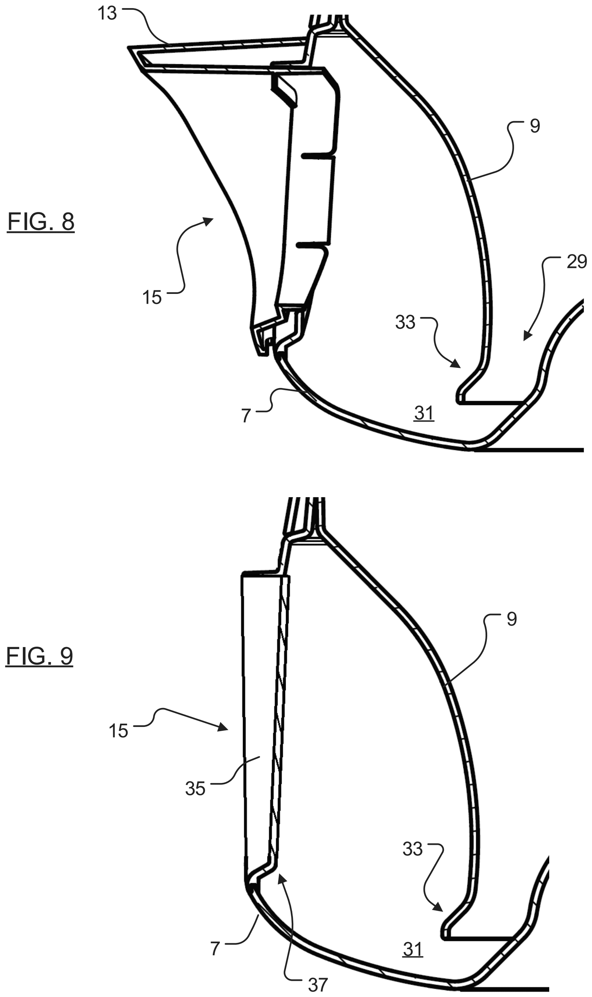

Referring now to Fig 8, there is depicted an enlarged view of the part of the base shown within the dashed box labelled B in Fig. 4. Fig. 9 shows the same area, but with the rain hood 13 removed so that the configuration of the base in the vicinity of the feeding port 15 can be seen.

As shown in Fig. 8, the funnel 9 (which is open at either end) fits over the domed recess in the base 7 of the feeder 1 (which domed recess forms the second part 25 of the aforementioned locating system). Each end of the funnel is open, and a distal open end (i.e. the end closest to the stand, when the feeder is on the stand) has a smaller diameter than a proximal open end (as can best be seen in Fig. 4). The distal end portion of the funnel 7 co-operates with the domed recess in the base 7 to define a channel 29 through which feed can flow from the hopper/funnel and into a feed area between the base and the open distal end of the funnel. As will be appreciated by persons of skill in the art, the geometry of the feeder is such that when the hopper is full with feed, the level of feed in the feed area 31 will always tend to be at or slightly above the peripheral edge of the open distal end of the funnel, and hence easily accessible to poultry via the feeding port 15.

To avoid food waste and attracting vermin, the distal end region of the funnel is flared in a radially outward direction to form an angular circumferential flange 33 that extends away from the domed recess in the base towards the feeding port 15. The flange 33 is configured to make it difficult for poultry to pull additional feed from the hopper/funnel into the feed area 31 by reaching up into the feed channel 29. This arrangement, in turn, makes it difficult for poultry to raise the level of feed within the feed area above the peripheral edge of the open distal end of the funnel to a point where they can put their foot into the feeding port 15 and rake feed out of the feeder.

As best shown in Fig. 9, the feeding port 15 is defined by an inwardly extending cowl 35 formed in the base 7. A lower portion of the cowl 35 that defines the feeding port forms a lip 37 that extends inwardly from the base 7 towards the funnel 9. The lip 37 functions as an additional means to stop poultry from raking feed out of the feeder and onto the ground, as feed pulled from the feed area 31 towards the feeding port 15 will hit the lip 37 and be directed back into the feed area 31.

In this aspect of the disclosure, there is provided a poultry feeder comprising a base and a funnel within the base, wherein the funnel cooperates with the base to define a feed area into which feed can fall, a distal end region of the funnel being flared in a radially outward direction to form an angular circumferential flange that extends towards a feeding port formed in said base.

In another implementation, there is provided a poultry feeder comprising a base and a funnel provided within the base, wherein a feeding port in the base is defined by an inwardly extending cowl, a lower portion of the cowl forming a lip that extends inwardly from the base towards the funnel.

In yet another implementation, there is provided a poultry feeder comprising a base and a funnel within the base, wherein the funnel cooperates with the base to define a feed area into which feed can fall, a distal end region of the funnel being flared in a radially outward direction to form an angular circumferential flange that extends towards a feeding port formed in said base, said feeding port being defined by an inwardly extending cowl, a lower portion of the cowl forming a lip that extends inwardly from the base towards the funnel.

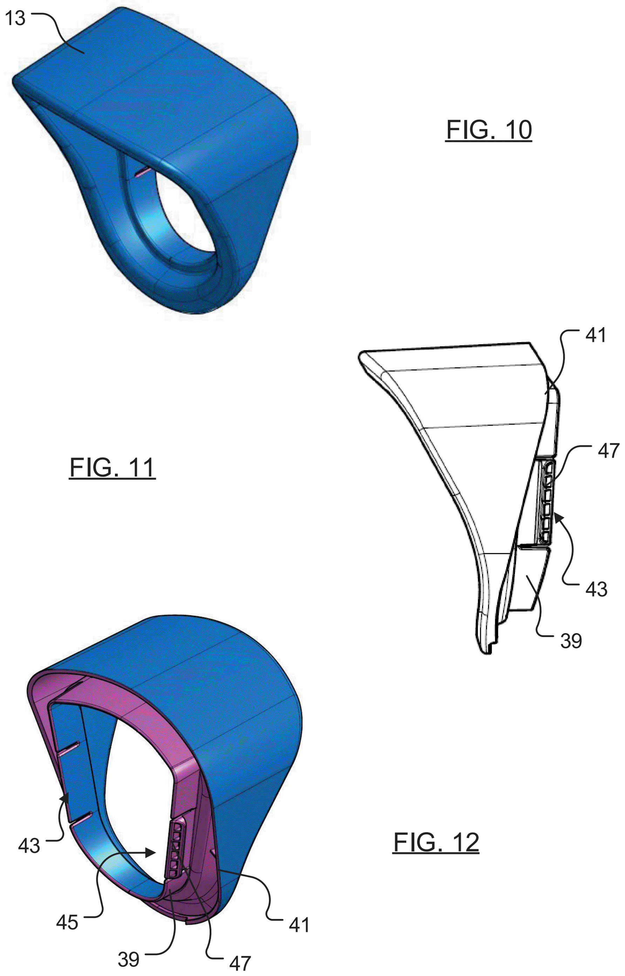

Reference will now be made to Figs. 10, 11 and 12 which depict, respectively, a front perspective view, a right side elevation and a rear perspective view of a rain hood 13. The rain hood comprises an inner wall 39 that fits within the feeding port 15, and an outer wall 41 that is spaced from the inner wall 39. As shown in Figs. 11 and 12, the inner wall projects beyond the outer wall, and includes a pair of lateral tabs 43, 45. Each lateral tab 43, 45 includes a barb 47 (only one of which is visible) that is inclined towards the outer wall 41. When the inner wall is pushed into the feeding port, the barbs bear against the base and cause the tabs 43, 45 to flex inwardly, before snap-fitting behind the flange of the feeding port to couple the rain hood to the base.

When fitted to the base, the outer wall acts to redirect rainwater away from feeding port 15 and feed area 31, and additionally functions to make it more difficult for poultry feeding at a given feeding port to see other birds feeding at adjacent ports. This arrangement, in addition to diverting rainwater, helps reduce bullying whilst the birds are feeding. Another advantage of this arrangement is that a user can detach the rain guards from the base if they are not required, for example because the feeder is located inside an enclosure and shielded from rain.

In this implementation of the teachings of this disclosure, there is provided a rain hood for a poultry feeder, said rain hood comprising an inner wall that includes first and second tabs, said tabs each including a barb and being resiliently moveable to enable the barbs to snap-fit behind a peripheral wall of said feeder to couple the rain hood to the feeder.

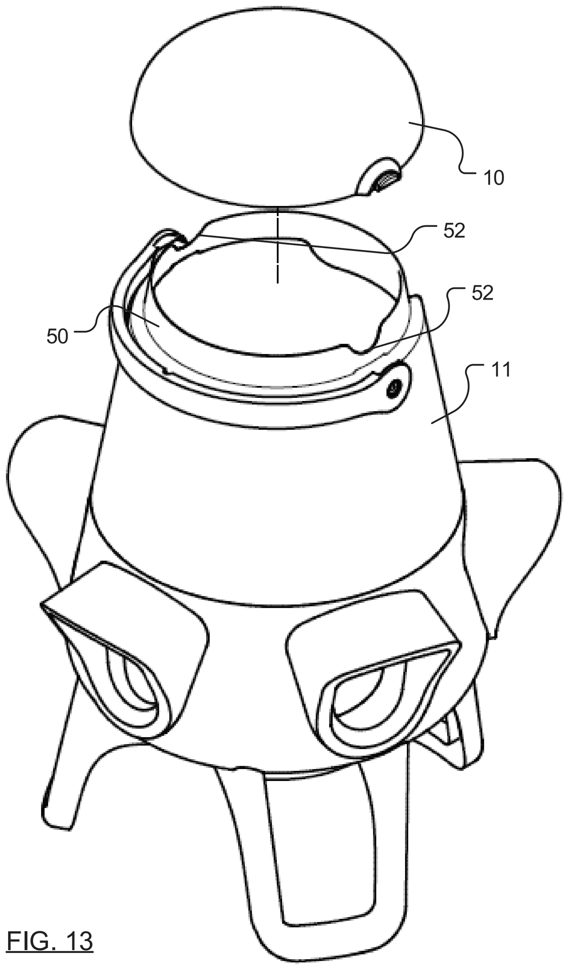

Referring now to Fig. 13, there is depicted a perspective view of the feeder with the lid 10 separated from the hopper 11. As depicted, a proximal open end of the hopper 11 is defined by a radially recessed wall 50 in which a pair of diametrically opposed locating recesses 52 are formed.

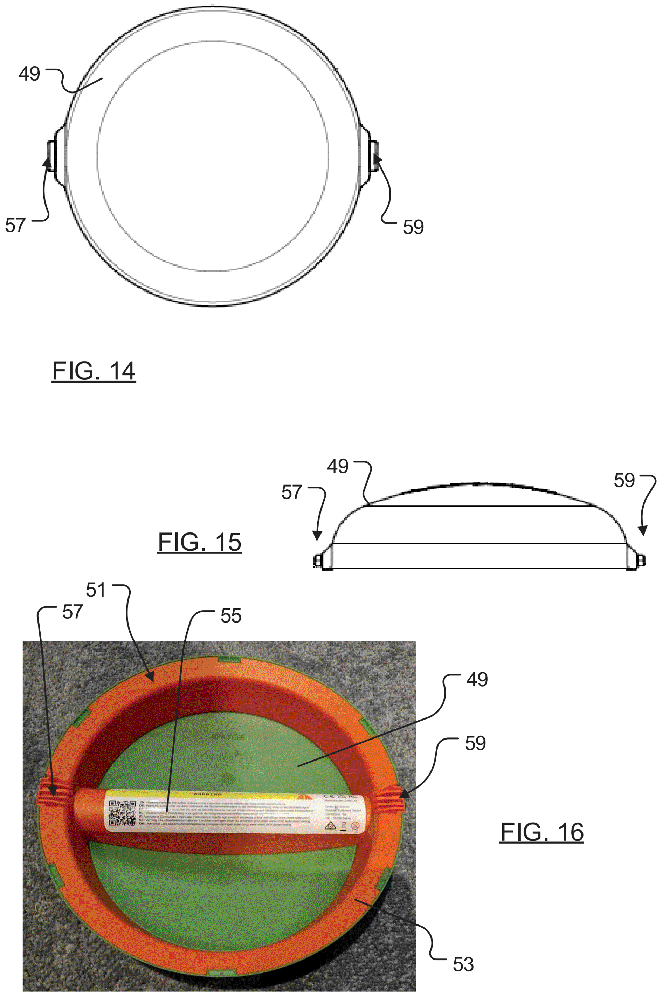

As shown in Figs. 14 to 16 (which are, respectively, a top plan view of the lid, a side elevation of the lid, and an underside plan view of the lid), the lid 10 comprises a domed outer shell 49, and an internal brace 51 (the orange component depicted in Fig. 16) fitted within the shell 49. The internal brace 51 comprises a circular portion 53, and a rib 55 that extends diametrically across the circular portion 53. As shown in Fig. 16, the rib is recessed relative to the circular portion of the brace. The circular portion further comprises a pair of tabs 57, 59 that are semi-circular in cross-section (in a direction perpendicular to said recessed rib 55) and project from the circular portion beyond the domed outer shell 49.

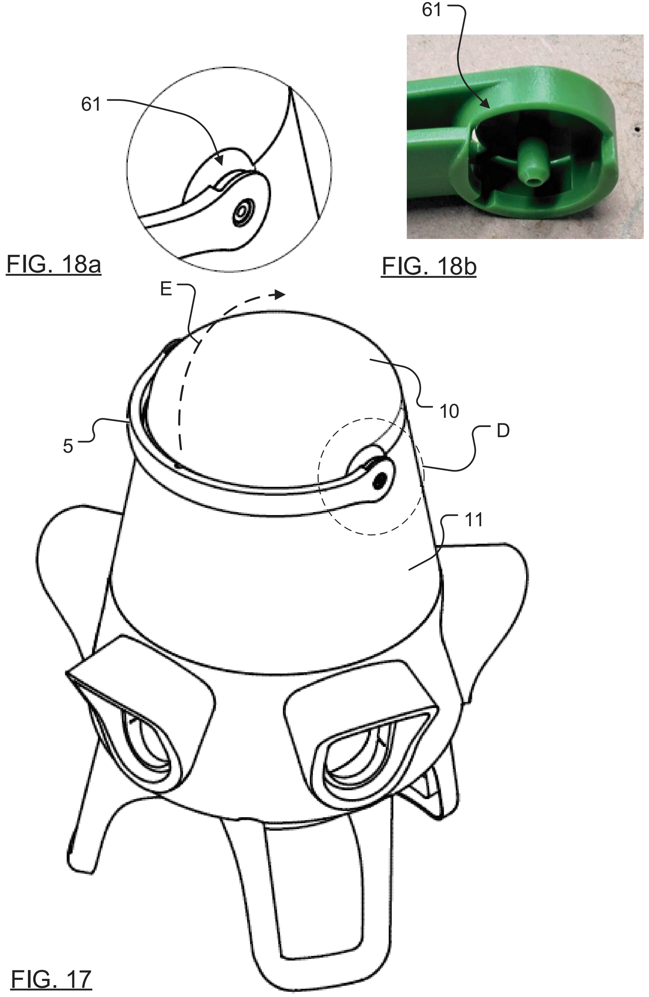

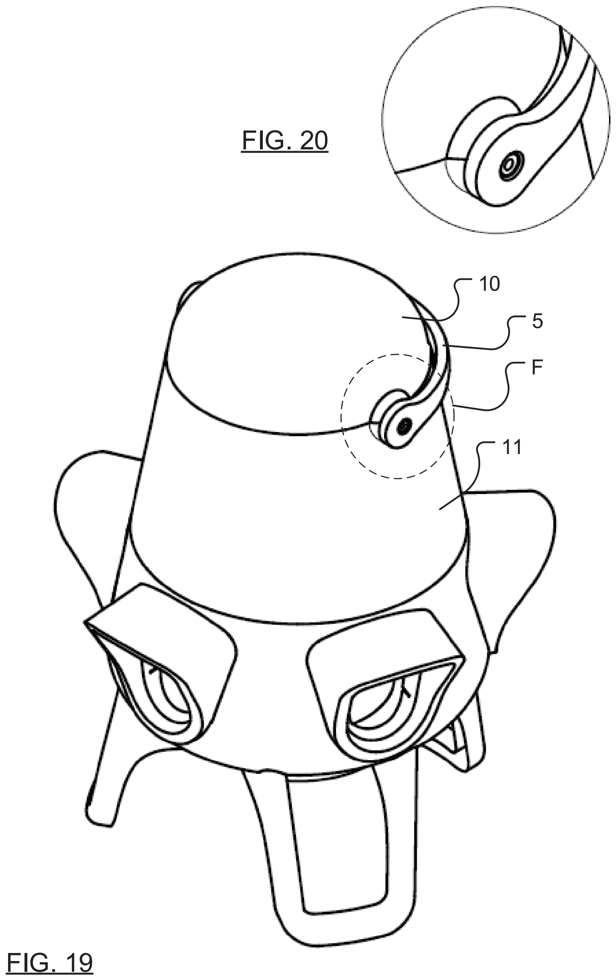

Referring now to Figs. 17 and 18a (where Fig. 18a is an enlarged view of the portion of Fig. 17 that is within the dashed circle which is labelled "D"), each end of the handle 5 includes a cut-away circumferential wall portion 61 - also shown in Fig. 18b - that the aforementioned tabs 57, 59 locate in when the lid is placed on top of the hopper with the recessed rib 55 located in the diametrically opposed locating recesses 52 in the radially recessed hopper wall 50. Once so located, moving the handle 5 in the direction labelled E in Fig. 17 to the position shown in Figs. 19 and 20 (where Fig. 20 is an enlarged view of the portion of Fig. 19 within the dashed circle which is labelled "F") causes the circumferential walls of each handle end to rotate around the tabs 57, 59 until the tabs are no longer aligned with the respective cut-away wall portions 61 (as shown in Figs. 19 and 20). In this position, the lid is locked to the hopper until such a time as the handle is moved back to the position shown in Fig. 13.

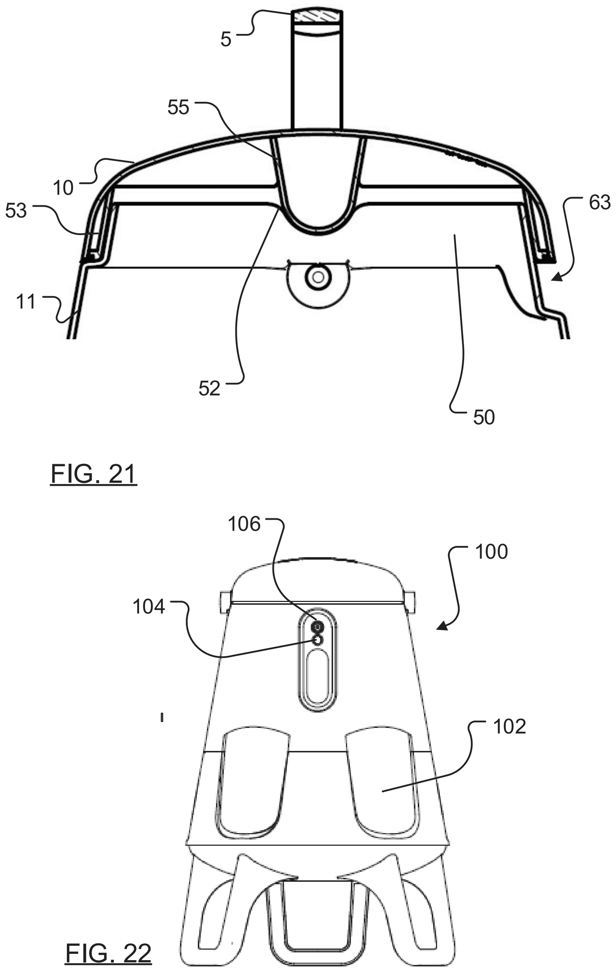

Referring now to Fig. 21 (which shows a cross-sectional view through the hopper and lid with the handle in a position roughly midway between the handle positions shown in Figs. 17 and 19), in addition to enabling the easy alignment of the lid on the hopper (which is particularly advantageous when refilling the hopper in low light conditions), the rib 55 also acts to brace the handle 5 when the hopper is full (and hence relatively heavy) and hung from a support. Without the bracing action of the rib, the weight of the feed could otherwise cause the hopper to deform and the handle ends to move towards one another, which flexing of the handle over time could cause it to fracture. The bracing action of the rib resists movement of the handle ends towards one another when the feeder is supported from above.

Also shown in Fig. 21, is an additional recess 63 formed in the hopper wall that allows one to easily grasp the lid to lift the lid off the hopper when the handle is in the unlocked position.

In this implementation of the teachings of the invention, there is provided a poultry feeder having a hopper, a lid for closing an open end of the hopper, and a handle coupled at diametrically opposite points to said hopper, wherein the lid further comprises a rib that is operable - when the lid closes the open end of the hopper - to brace opposite ends of said handle and resist movement of said handle ends towards one another when the feeder is hung from the handle. Another arrangement provides a poultry feeder having a hopper, a lid for closing an open end of the hopper, and a handle coupled at diametrically opposite points to said hopper, wherein the lid further comprises a rib that locates - when the lid closes the open end of the hopper - in diametrically opposed recesses adjacent the open end of the hopper to align the rib with the handle.

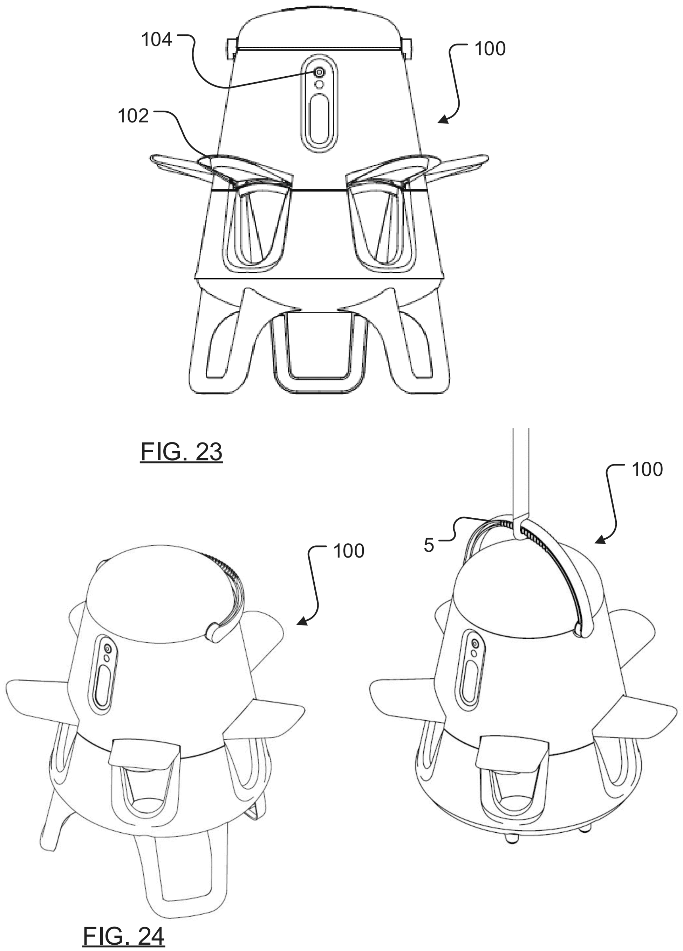

Referring now to Fig. 22 and 23, there is depicted a schematic front elevation of a SmartFeeder 100. Functionally common components of the SmartFeeder and above described Lo-Fi feeder are designated with like reference numerals.

An important difference between the SmartFeeder and the Lo-Fi feeder described above is that the SmartFeeder includes powered feeding port doors 102 that can be moved by a motor assembly to close the feeding ports (to make it even more difficult for vermin to access feed within the feeder). Fig. 22 shows the SmartFeeder with feeding port doors open, and Fig. 23 shows the SmartFeeder with feeding port doors closed. As with the Lo-Fi feeder, the SmartFeeder can be mounted on legs or hung by the handle 5 from a support, as shown schematically in Fig. 24. Also in common with the Lo-Fi feeder, the SmartFeeder in this particular arrangement has five feeding ports, but a greater or fewer number of feeding ports may be provided if desired.

Another important difference between the SmartFeeder and the Lo-Fi feeder described above is that the SmartFeeder can be configured to operate automatically, and/or to communicate information to the user. Interaction with a user can be achieved by means of combined LED array and control button 104 provided on the feeder, via Bluetooth^{™} (or other short-range wireless communications protocol, e.g. Zigbee^{™}), or via Wi-Fi and an application on a user's computing device (such as a smartphone or tablet).

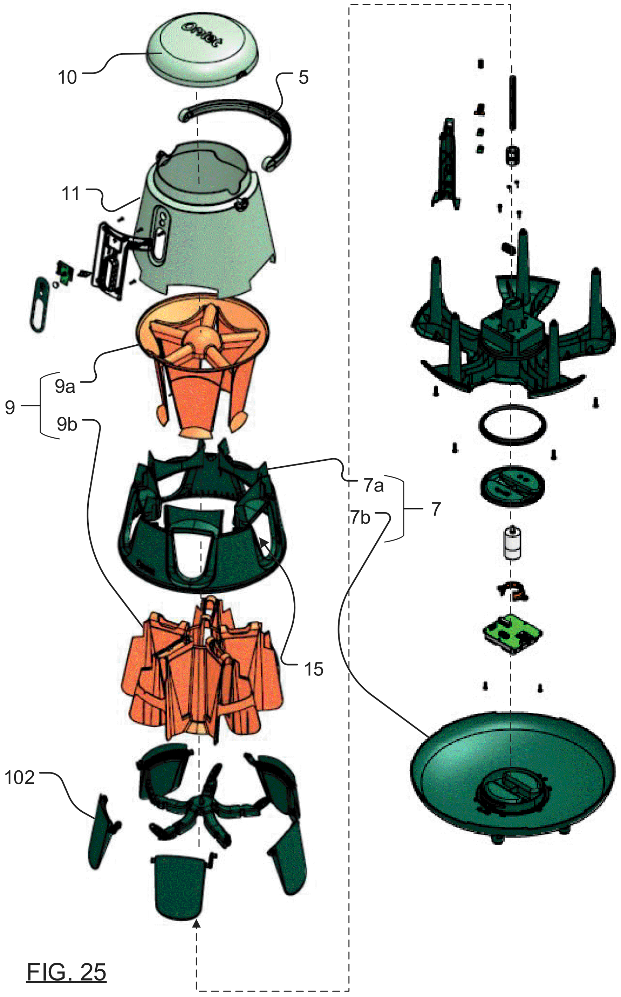

As will be expected, the SmartFeeder is significantly more complicated than the aforementioned Lo-Fi feeder, but despite this there are functionally similar components common to both feeders. Referring now to Fig. 25, which is an exploded view of the SmartFeeder 100, the feeder comprises a handle 5, a lid 10, a hopper 11, a funnel 9 (which in this case is formed from two components 9a and 9b), a base 7 (which in this case is also formed from two components 7a and 7b), and a plurality of feeding ports 15 (in this example, five feeding ports) defined in the base.

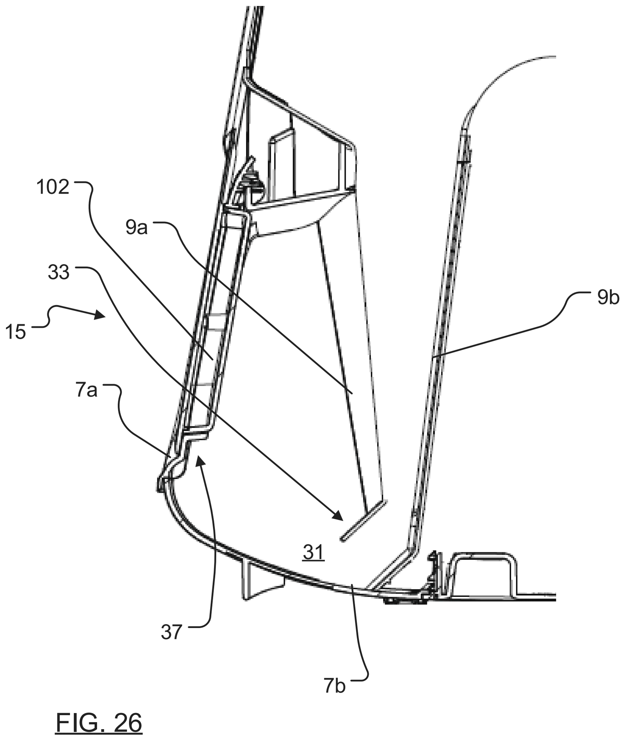

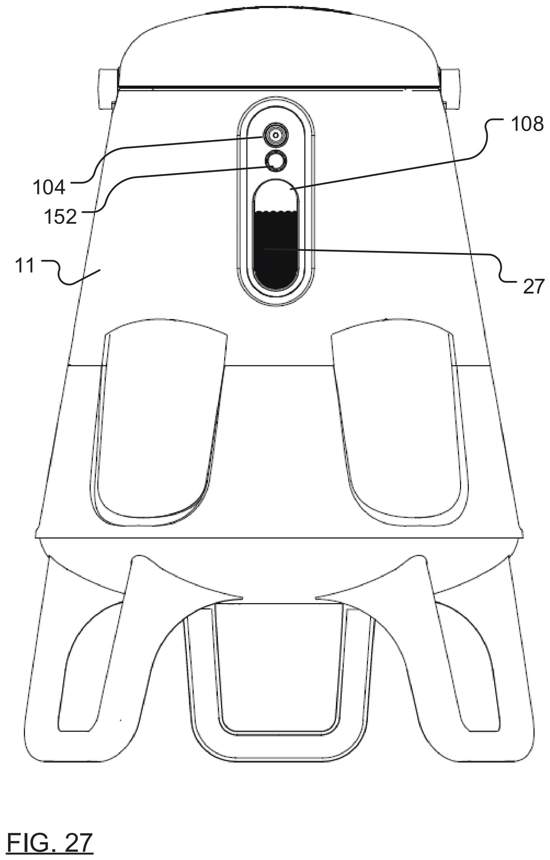

The lid 10 of the SmartFeeder is structurally identical to the lid of the Lo-Fi feeder, and the SmartFeeder lid interacts with the handle and hopper in the same way as the arrangement described above for the Lo-Fi feeder. Likewise, as shown in Fig. 26, the funnel co-operates with the base to provide a feed area 31 that is similar to that of the Lo-Fi feeder with a flange 33 and lip 37 that make it difficult for poultry to rake feed from the feeder. In another similarity shown in Fig. 27, the SmartFeeder includes a transparent panel 108 in the hopper which allows users to visually determine the amount of feed within the hopper 11.

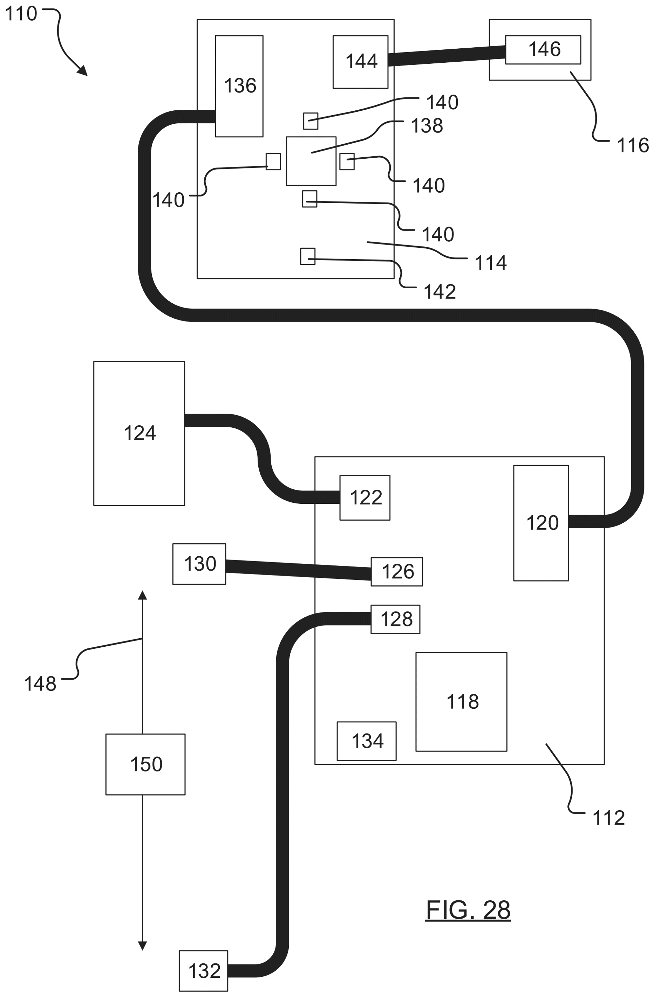

The SmartFeeder 100 is controlled by means of a control system 110 of the type depicted in Fig. 28. The control system 110 comprises a main PCB board 112, a user interface PCB board 114, and a level sensor board 116. As shown, for signal transfer between the boards, the main PCB board 112 is electrically connected to the interface board 114, and the interface board 144 is electrically connected to the level sensor board 116. Connections between the components within each board have been omitted, for clarity.

The main PCB board 112 comprises a processor 118 (in this instance an ESP32-S3-WROOM-1 microprocessor available from Espressif Systems (see: http://www.espressif.com/) that has on-board Wi-Fi and Bluetooth^{™} interfaces - *inter alia* for the receipt of instructions and the output of data), an interface 120 for signal transfer to and from the user interface board 114, a motor interface 122 for signal transfer between the main PCB board 112 and a motor 124, upper and lower limit switch interfaces 126, 128 that are coupled respectively to an upper limit switch 130 and a lower limit switch 132. The main PCB board also comprises a programming interface 134 for flashing the processor. The processor is configured to execute software for operating and controlling the SmartFeeder.

The user interface PCB comprises a main PCB board interface 136 for signal transfer to and from the main PCB board 112, a switch 138 that is surrounded by (in this example) four multi-colour LEDs 140, a light detector 142, and an interface 144 for signal transfer to and from the level sensor board 116. The switch and LEDs are associated with the aforementioned combined LED and control button assembly 104 (in particular, pressing the button operates the switch, and light from lit LEDs is visible through an annular transparent panel surrounding the button).

The level sensor board 116 comprises a level sensor 146. In one envisaged arrangement, the level sensor 146 comprises an optical level sensor, for example a LIDAR time of flight sensor. An illustrative sensor is the VL53L4CD Time-of-Flight (ToF) sensor available from ST Microelectronics (see: http://www.st.com/). This ToF sensor comprises an infrared laser and detector in a one-chip package, and can be used to monitor the level of fluid or solid in a container by shining laser light on the fluid/solid and measuring the time taken for the light to be reflected back to the sensor (it being the case that it will take longer for the light to be reflected as the level in the container drops). In other envisaged arrangements, other types of level sensor - such as an ultrasonic level sensor - could instead be employed.

The processor 118 is configured to execute software that implements a variety of different functions. For example, the processor is configured to control the motor 124 to operate a worm drive 148 that moves an elevator linkage assembly 150 between the limit switches 130, 132 to open and close the doors 102, activation of either limit switch causing the processor to stop the motor from operating.

In a preferred implementation, the processor is configured to implement crush detector functionality (so that poultry is not caught in a closing door) by monitoring the drive current drawn by the motor. In the event that the drive current should spike - for example when the door is closing, the processor is operable to operate the motor in reverse to re-open the door. Such functionality can also help prevent damage to the feeder if something should obstruct opening or closing of the doors.

The processor 118 may be operable to automatically open the doors of the feeder at dawn (or, more accurately, at a desired ambient light level) and close them again at dusk, based on light level signals received from the light sensor 142 on the user interface PCB 114 (which light level sensor is provided with light by means of a light pipe 152 (Fig. 27) provided below the combined LED/control button 104). More generally, the processor may be operable to automatically open/close the doors at any one or more of: preset times/days/dates, for preset time intervals, at preset light levels (e.g. dawn/dusk), in response to operation of the switch 138 by pressing the control button 104, and in response to instructions received wirelessly from a computing device (for example, via an app running on a smartphone).

In a preferred arrangement, the processor is configured to execute software that provides information to the user, for example by illuminating one or more of the LEDs 140, or by feeding information back to a computing device, for example via a Wi-Fi or Bluetooth^{™} communications link, and to an app executed by that device. For example, the processor may be configured to periodically operate the time-of-flight sensor 146 to determine the level of feed in the feeder. This information can be passed back to an app to update the user. In one envisaged arrangement, the control system is configured to update an app on a periodic basis, for example once an hour. The processor might be configured to notify the user, for example by sending control signals to cause a smartphone to issue an alert, in the event that the level of feed in the feeder should run low.

The processor could, alternatively or additionally, indicate the level of feed in the feeder by illuminating one or more of the LEDs in accordance with a colour code that indicates the level of feed in the feeder. For example, a pink flashing light at the combined LED array and control button 104 may indicate that the feeder is less than 25% full. This is particularly advantageous as it allows a user to visually check the level of feed from a distance, without having to open the lid, and without having to operate the app.

The control button may be operable to program and configure the feeder, and the processor may be operable to illuminate the LEDs in differing colours to provide an indication of the operating status of the feeder. For example, the processor may be bidden to operate the LEDs to indicate in which operating mode the feeder currently is, whether a temporary override has been activated, whether a fault is present, the level of power left in the battery, and whether the feeder is connected by Wi-Fi, Bluetooth^{™} or offline.

Enclosed as an appendix to this disclosure is a "setup guide" for the SmartFeeder, the contents of which are incorporated herein by reference as if they were reproduced here in full. The enclosed "setup guide" provides a number of illustrative operating procedures that can be invoked by means of the control button 104, and/or via an app.

In general terms, in an implementation of the teachings of this disclosure, there is provided a poultry feeder comprising a store for feed, said feed store being accessible to poultry via a feeding port that is opened and closed by a door, the feeder further comprising a motor and a controller operable to control the motor to open and close the door, and hence the feeding port. In other words, one envisaged arrangement provides a poultry feeder that comprises a base, and a hopper coupled to the base, wherein the base includes a plurality of feeding ports that are each opened or closed by an associated feeding port door, the feeder comprising a motor assembly and a controller, the controller being operable to control the motor assembly to open and close the doors. In a preferred arrangement, the controller may be operable to control opening and closing of the doors automatically.

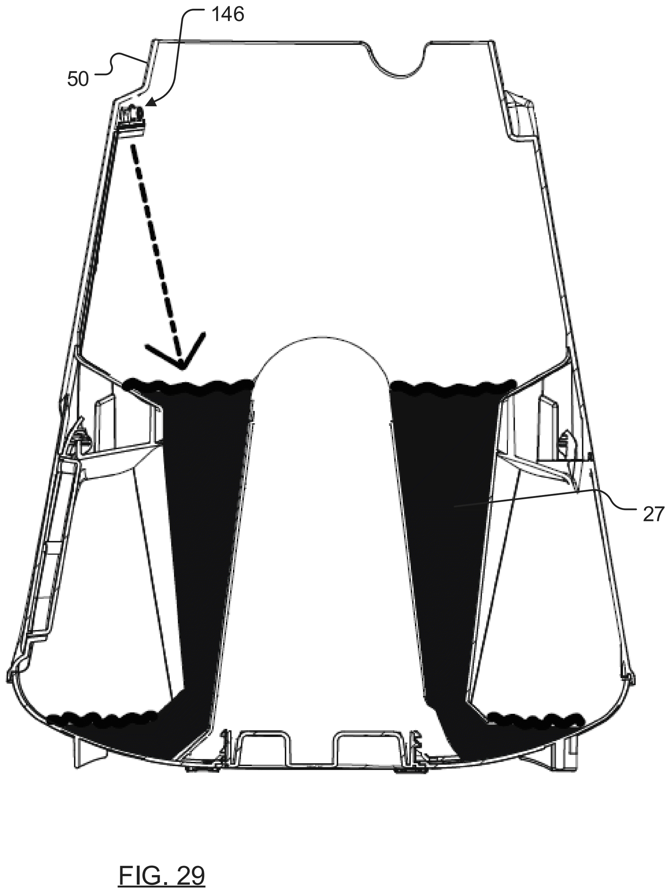

As aforementioned, the SmartFeeder is provided with a level sensor so that it can provide information to a user as regards the amount of feed remaining within the feeder. Fig. 29 is a schematic cross-sectional view through the hopper, funnel and base of a SmartFeeder showing a preferred location for a level sensor 146, in particular an optical level sensor such as the above described LIDAR ToF sensor. As shown in Fig. 29, the sensor 146 can be provided under a lip formed by a radially recessed peripheral wall that forms one open end of the feeder. By tucking the sensor away under the lip, the likelihood of the sensor being damaged or soiled is reduced.

As will be apparent to persons of skill in the art, laser light from a laser in the sensor is reflected by feed 27 in the feeder, and detected by a detector in the sensor. As the amount of feed in the feeder reduces, it will take longer for the light to travel from the laser in the sensor and be reflected back from the feed to the detector. Once the round-trip times for a full feeder and an empty feeder are known, the level of feed remaining in the sensor can readily be determined, for example by the processor or indeed by logic contained within the level sensor.

In a preferred arrangement, the level sensor is provided within a protective cover that is permeable to the signals emitted by the level sensor to enable a measure of the amount of feed in the feeder to be inferred.

In this implementation of the teachings of this disclosure, there is provided a poultry feeder comprising a level sensor that is operable to output sensor signals that vary according to the amount of feed within the feeder. A processor may be configured to receive said sensor signals, and based on said sensor signals generate an indication of the amount of feed within the feeder. The level sensor may comprise an optical or sonic level sensor.

When the doors of the feeder are open, as shown in Fig. 24, it is conceivable that damage might occur if the feeder is knocked over or struck. Since the doors project from the body of the feeder, it is the doors that are most vulnerable to damage. To address, it is proposed to provide a door that comprises a mounting rib, and a door panel that is frangibly coupled to the rib. In this way, if the feeder should be struck or fall over, the door panel will likely detach from the rib, thereby reducing the likelihood that the rib - and any internal components connected to the rib - will be damanged.

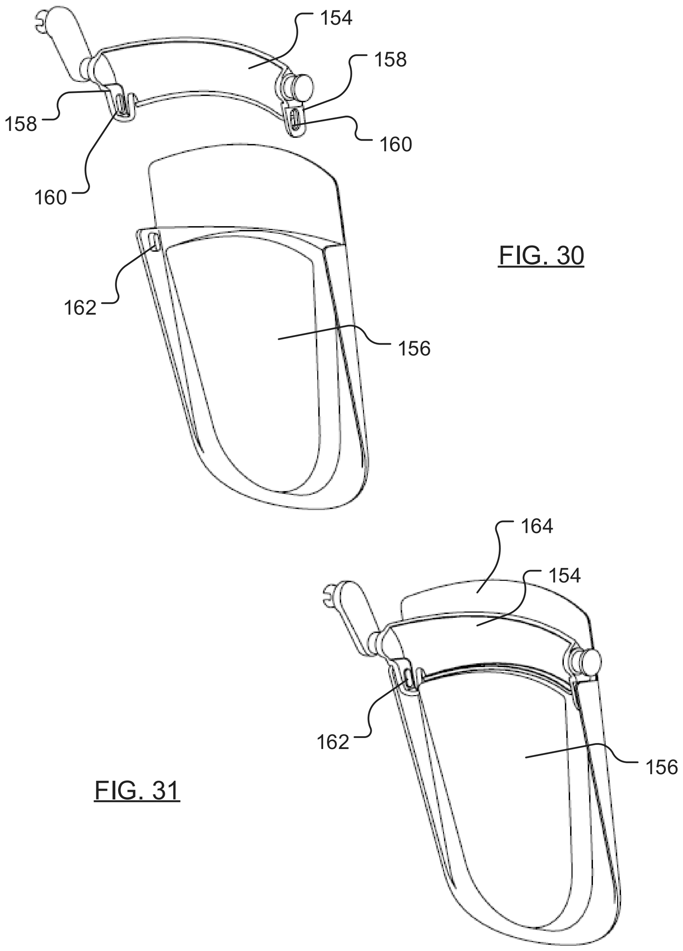

Fig. 30 shows a mounting rib 154 and an associated door panel 156. The rib is configured to be coupled to internal linkage for opening and closing the doors, and includes peripheral end panels 158 that each include a first part 160 of a two-part frangible coupling. The door panel 156 includes two second parts 162 (one of which is visible) of the two-part coupling. In this implementation, the first part comprises a recess or slot, and the second part comprises a projecting peg, but other arrangements will be apparent to persons of skill in the art.

When the rib is press-fitted to the door panel, as shown in Fig. 31, the first and second parts of the two-part frangible coupling engage to couple the door panel to the rib. In one arrangement, one part of the coupling snap-fits in the other. **In** the event that the door panel should be struck the two-parts of the frangible coupling decouple and the door separates from the rib to reduce the likelihood of damage being inflicted on internal components of the feeder. If this should occur, the frangible coupling can be remade to reattach the door panel to the rib simply by push-fitting the door panel to the rib.

In this implementation of the teachings of this disclosure there is provided a poultry feeder with a store for feed, the feed being accessible via one or more feeding ports, each said feeding port being closed or opened by means of a moveable door assembly, said door assembly comprising a mounting rib frangibly coupled to a door panel.

In a particularly preferred arrangement, the door panel may be provided with a region 164 in the vicinity of the rib, where the wall of the panel is thinned, as compared with the remainder of the door panel. This arrangement allow this region of the door panel to flex if it should abut against another wall of the feeder.

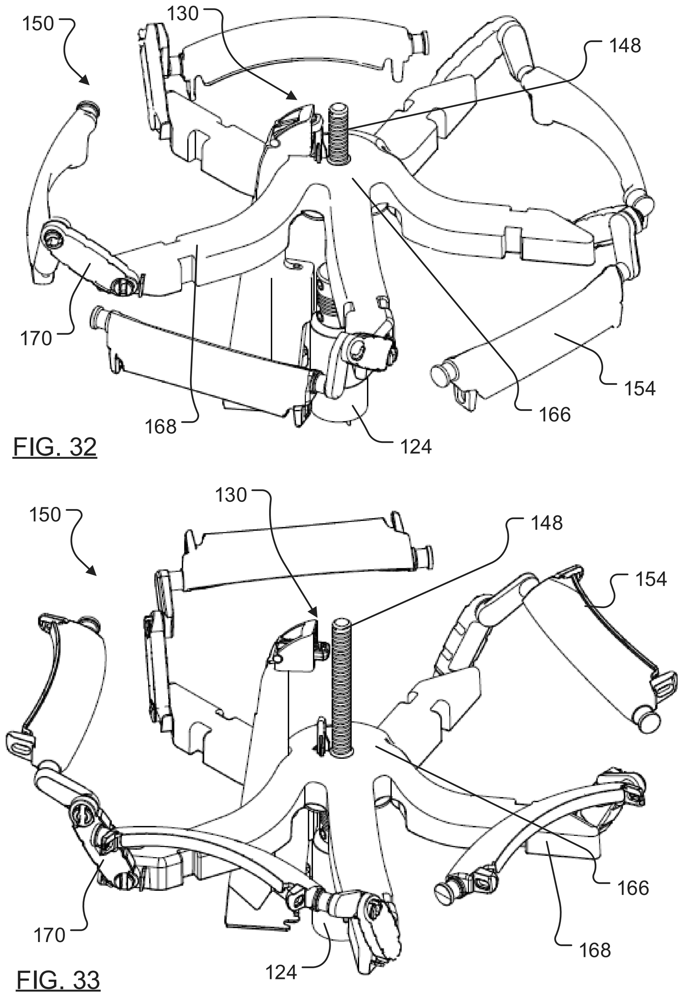

Referring now to Figs. 32 and 33, there is depicted a schematic representation of the elevator linkage assembly 150 that co-operates with the motor 124 and worm drive 148 to move the doors (only the ribs 154 of which are shown, for clarity) from a closed position (shown in Fig. 32) where the elevator linkage assembly 150 abuts the upper limit switch, to an open position (shown in Fig. 33) where the elevator linkage assembly 150 abuts the lower limit switch 132 (not visible). As shown, the elevator linkage assembly comprises a central hub 166 that engages with the worm drive 148 and a plurality of arms 168, one for each door, extending radially outwardly from the central hub to form a spider-like body. An end of each arm 168 remote from the central hub 166 is pivotally coupled to one end of linkage 170, and the other end of linkage 170 is in turn pivotally coupled to a rib 154. In this way, as the elevator linkage assembly is drawn towards and driven away from the motor, the linkage and ribs pivot to cause the door panels (not shown) to (at least substantially) simultaneously pivot and move to open and close the feeding ports in the feeder.

In this implementation of the teachings of the invention, there is provide a poultry feeder comprising a store for feed, a plurality of feeding ports for providing access to said feed, and a plurality of doors moveable to open or close said feeding ports, wherein said doors are coupled to a motor-driven drive member that moves all of said doors between the open and closed positions simultaneously.

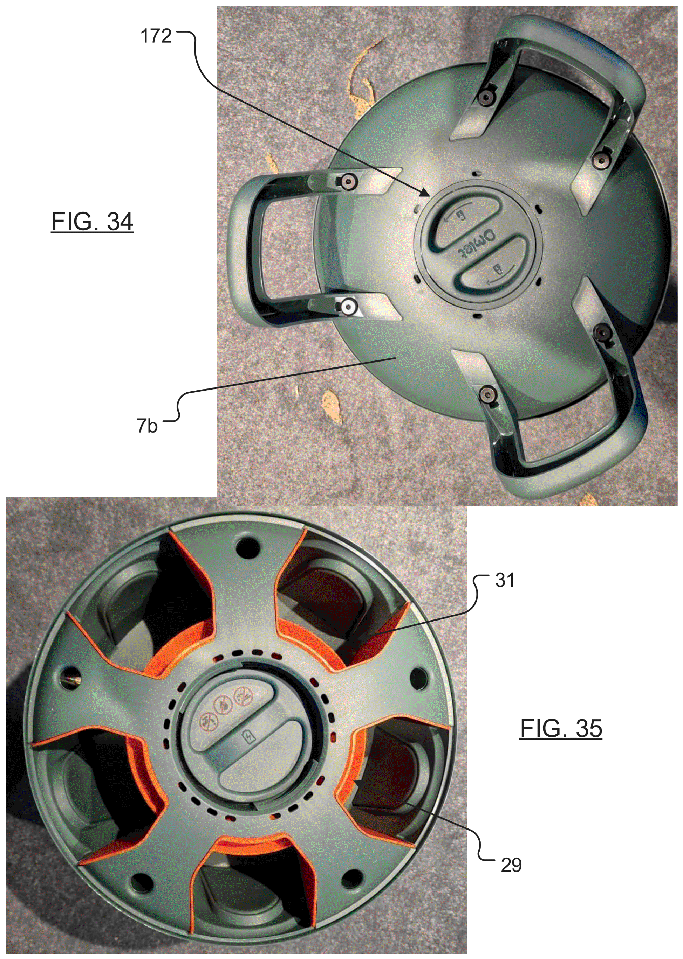

Referring now to Fig. 34, there is provided a photograph of the underside of the SmartFeeder. As shown, the base 7b of the feeder is secured to the remainder of the feeder by means of a single central fastener 172. By undoing fastener 172, the base 7b can be removed, and access can immediately be had - as shown in Fig. 35 - to the individual feed areas 31 and feed channels 29 within the feeder, thereby greatly facilitating cleaning of the feeder.

In this implementation of the teachings of this disclosure, there is provided a poultry feeder that comprises a feed store with a plurality of feed areas, each said feed area being capable of being fed with feed via a feed channel from a hopper, the feeder further comprising a base panel removable from the feeder to provide access to said feed areas and feed channels for cleaning. Preferably the base panel is coupled to the remainder of the feeder by means of a single fixing.

It can be seen from the foregoing, and will no doubt be well understood, that the Lo-Fi and SmartFeeder herein disclosed each provide a multitude of advantages over previously proposed poultry feeders.

It will also be appreciated that whilst various aspects and embodiments have heretofore been described, the scope of the present disclosure is not limited to the particular arrangements set out herein and instead extends to encompass all arrangements, and modifications and alterations thereto, which fall within the spirit and scope of this disclosure (including the appendix).

In particular, it should also be noted that whilst particular combinations of features have been described herein, the scope of the present disclosure is not limited to the particular combinations disclosed above, but instead extends to encompass any combination of features disclosed in this document and/or the accompanying appendix.

In particular, the order and/or dependencies of the accompanying claims should not be read as being a limitation of the scope of this disclosure. Rather, the particular order and dependencies of the accompanying claims should instead be read as being merely illustrative examples of combinations of claims that could be presented if desired. For example, if a given claim in the attached claim set refers to a particular one or ones of the preceding claims, the scope of this disclosure should not be interpreted as being limited only to the combination of that claim and the particular preceding claim or claims to which it refers. Rather, the reader is hereby put on notice that the scope of this disclosure actually extends to encompass the combination of that claim with any of the other claims in the accompanying claim set, regardless of whether or not that claim currently refers to those other claims in the accompanying claim set.

In addition, whilst aspects of this disclosure have been described above in the context of software modules that are executable by a processor, it should be noted that the scope of the disclosure is not limited to an implementation of the teachings of the disclosure in software. Rather, the skilled person will immediately appreciate that the functionality described herein may equally be implemented in hardware (for example, by means of a plurality of application specific integrated circuits (ASICS)) or, indeed, by a mix of hardware and software.

Finally, it should be noted that any element in a claim that does not explicitly state "means for" performing a specified function, or "steps for" performing a specific function, is not to be interpreted as a "means" or "step" clause as specified in 35 U.S.C. Sec. 112, par. 6. In particular, the use of "step of" in the claims appended hereto is not intended to invoke the provisions of 35 U.S.C. Sec. 112, par. 6.

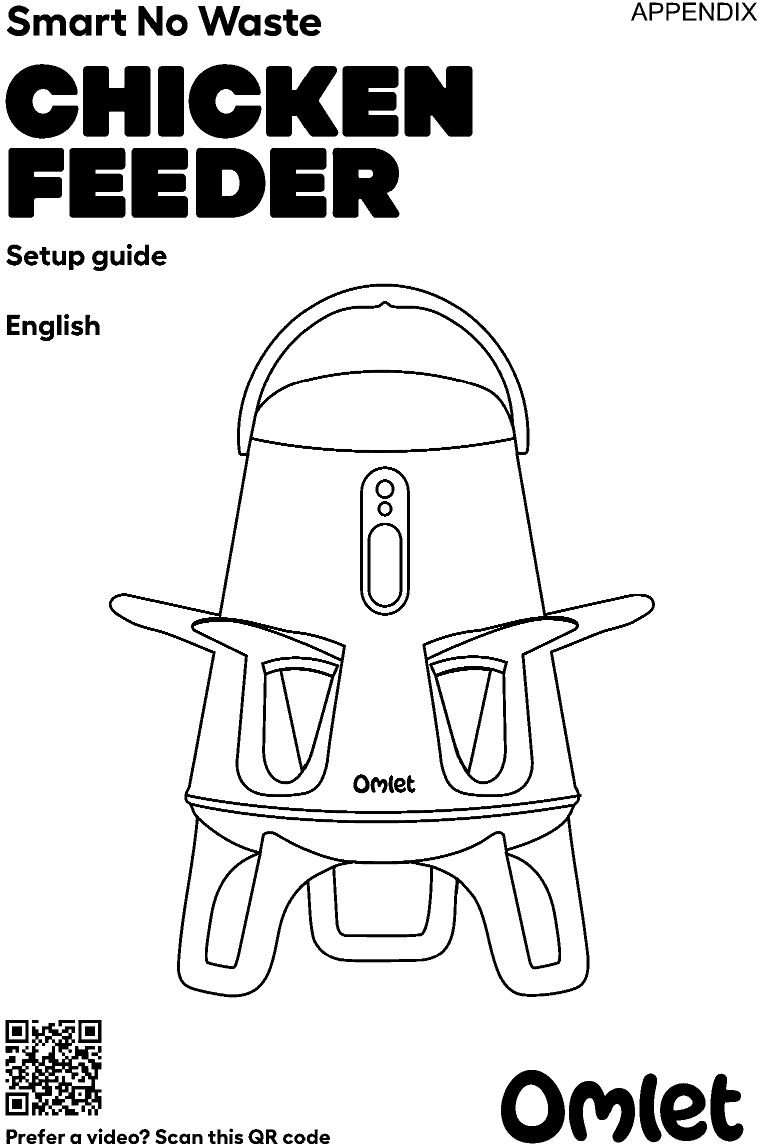

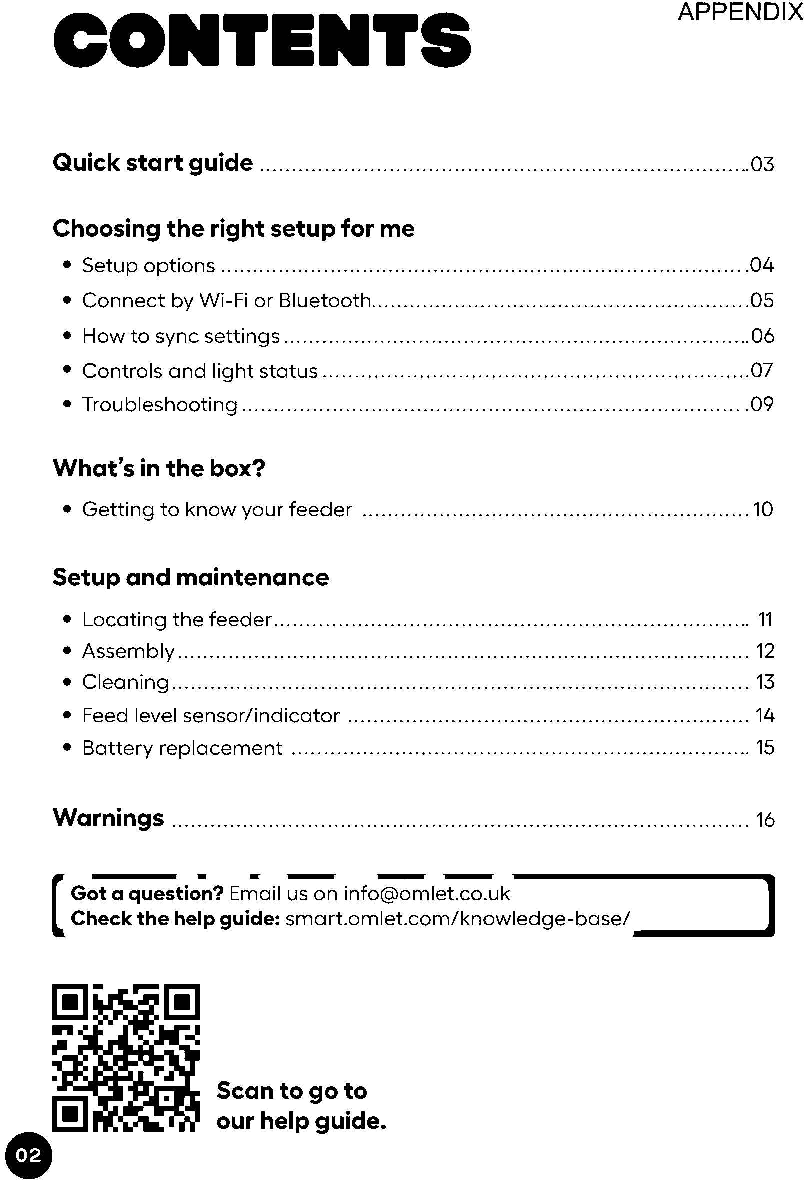

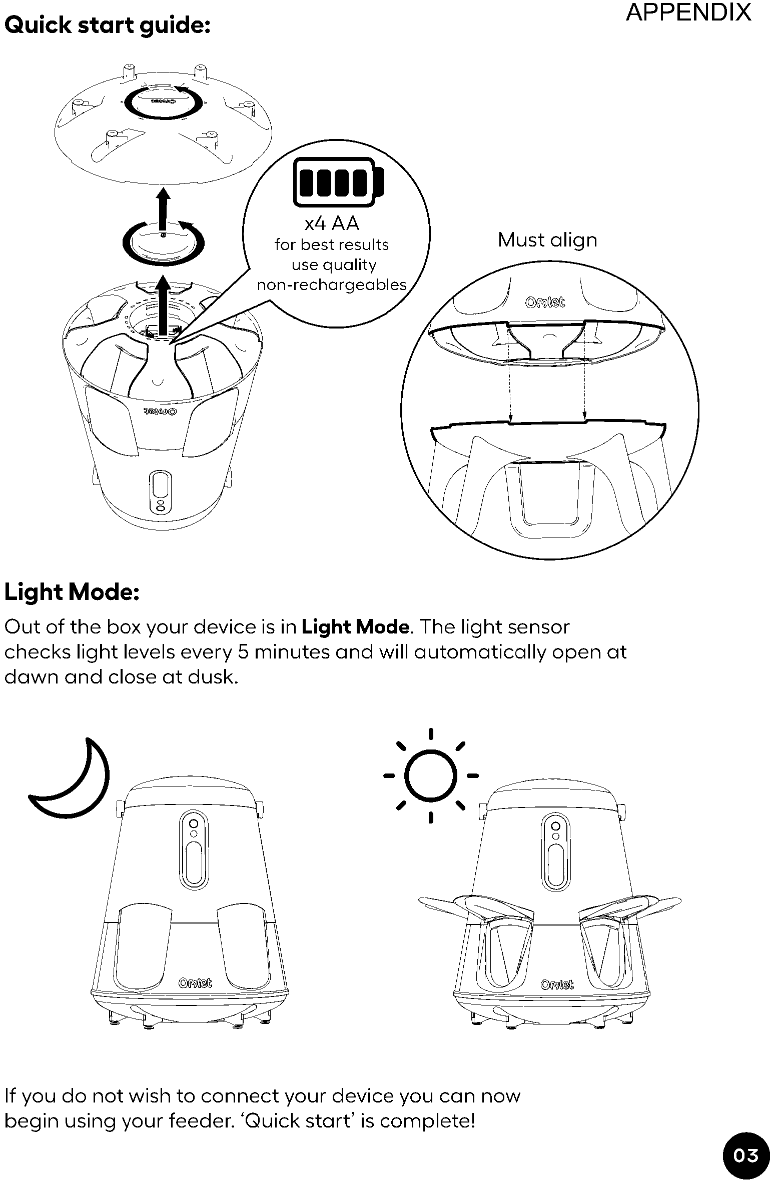

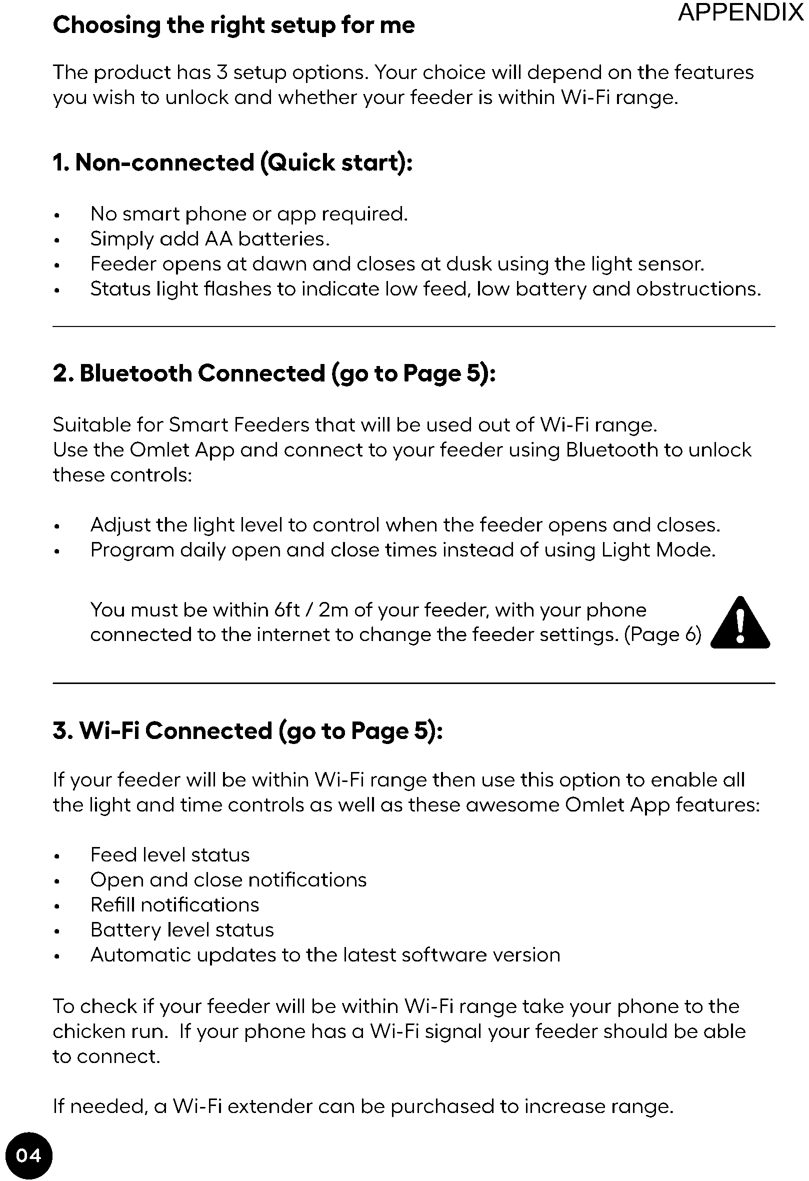

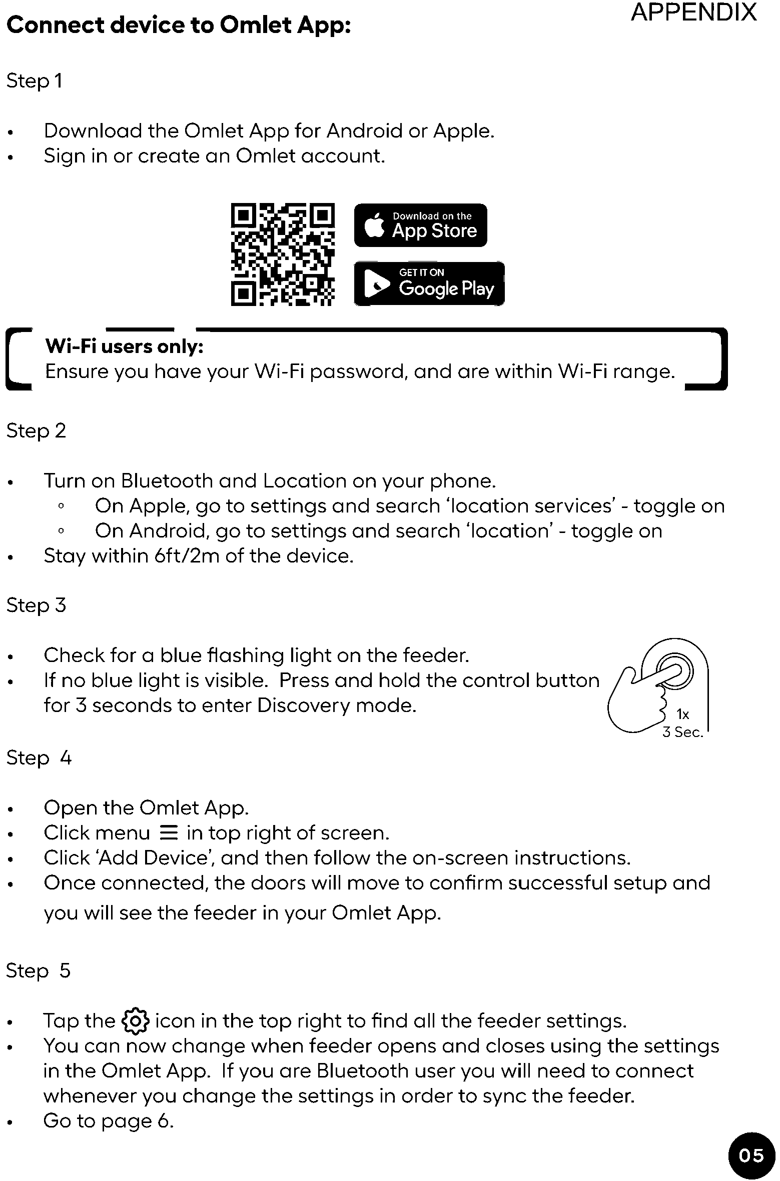

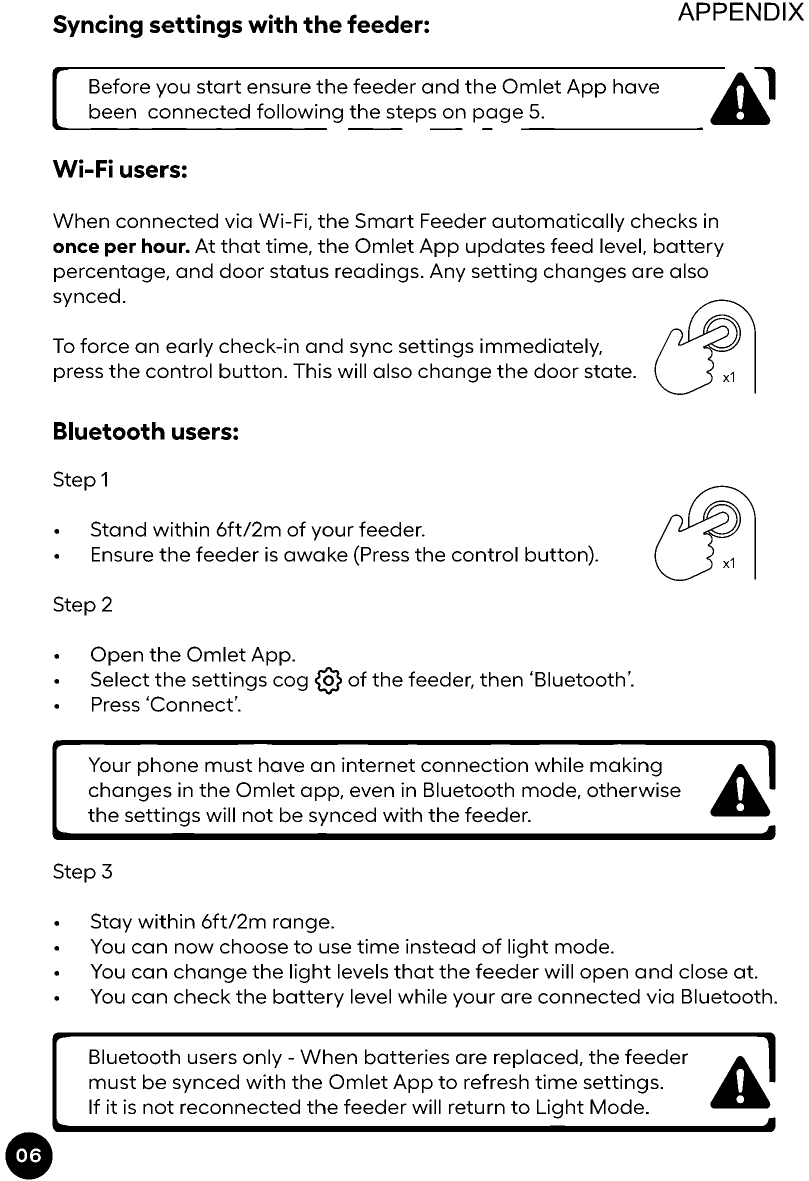

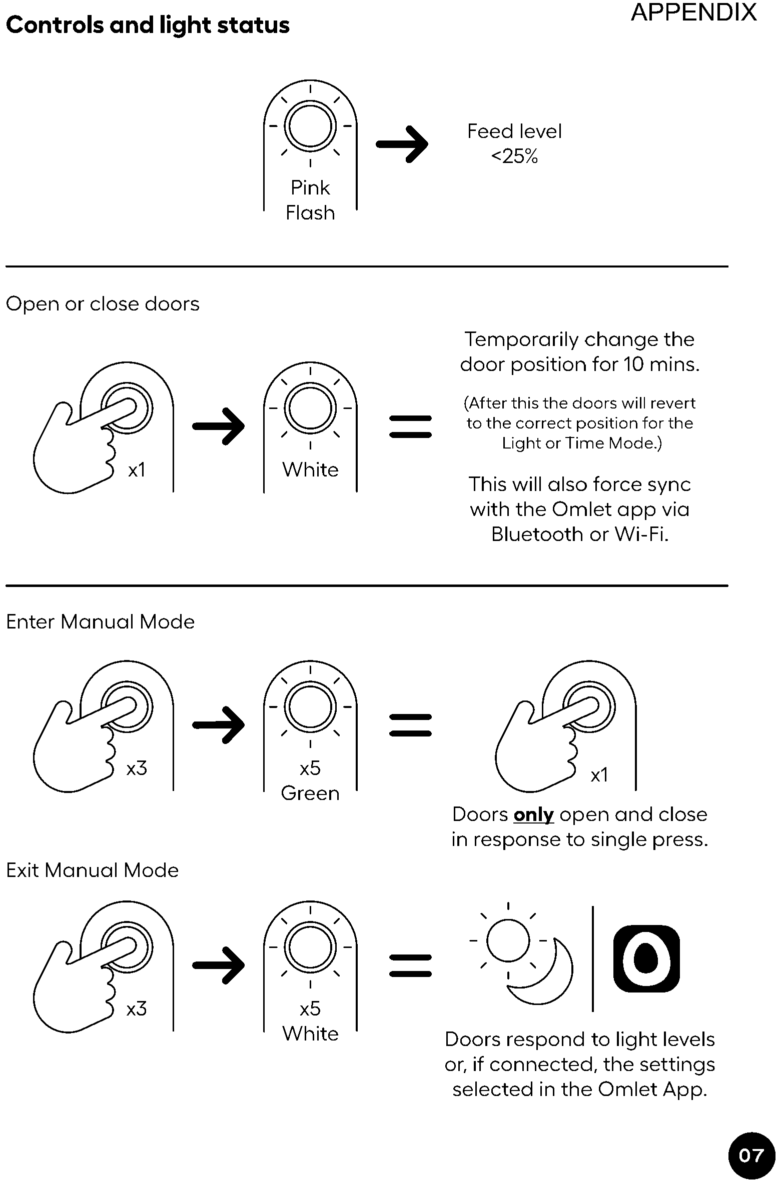

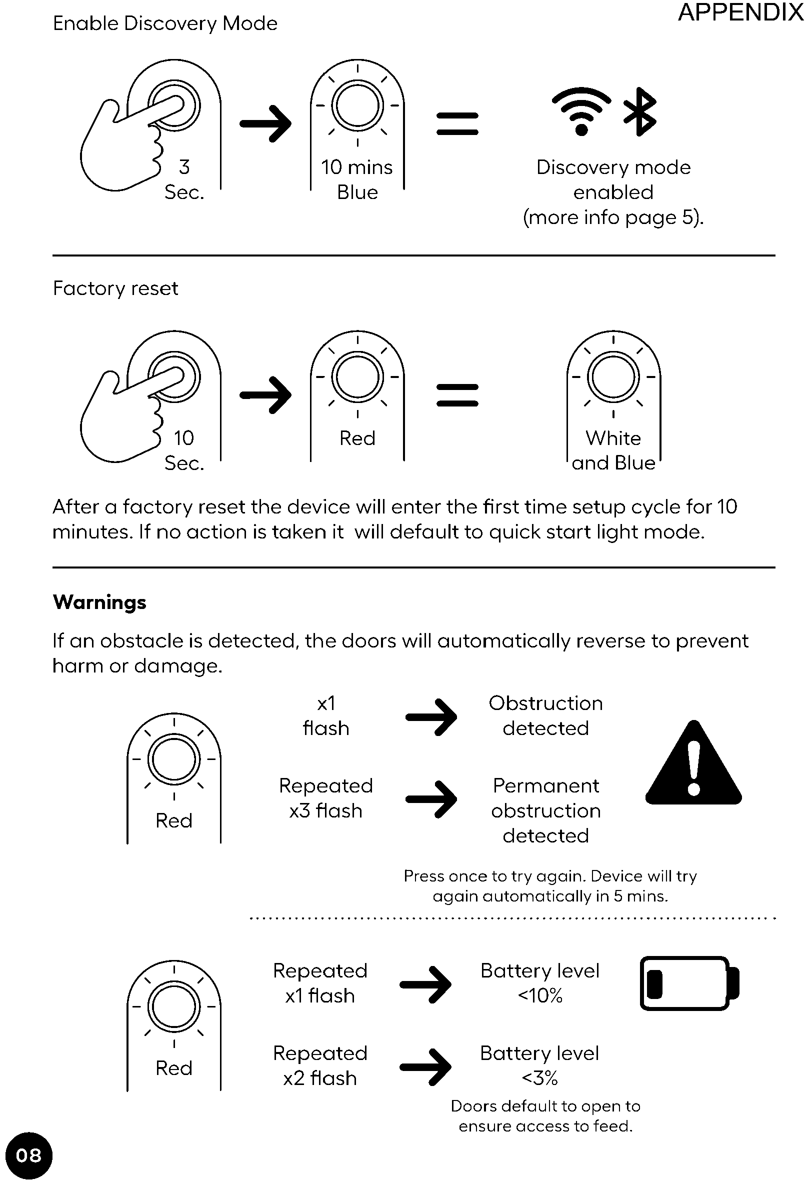

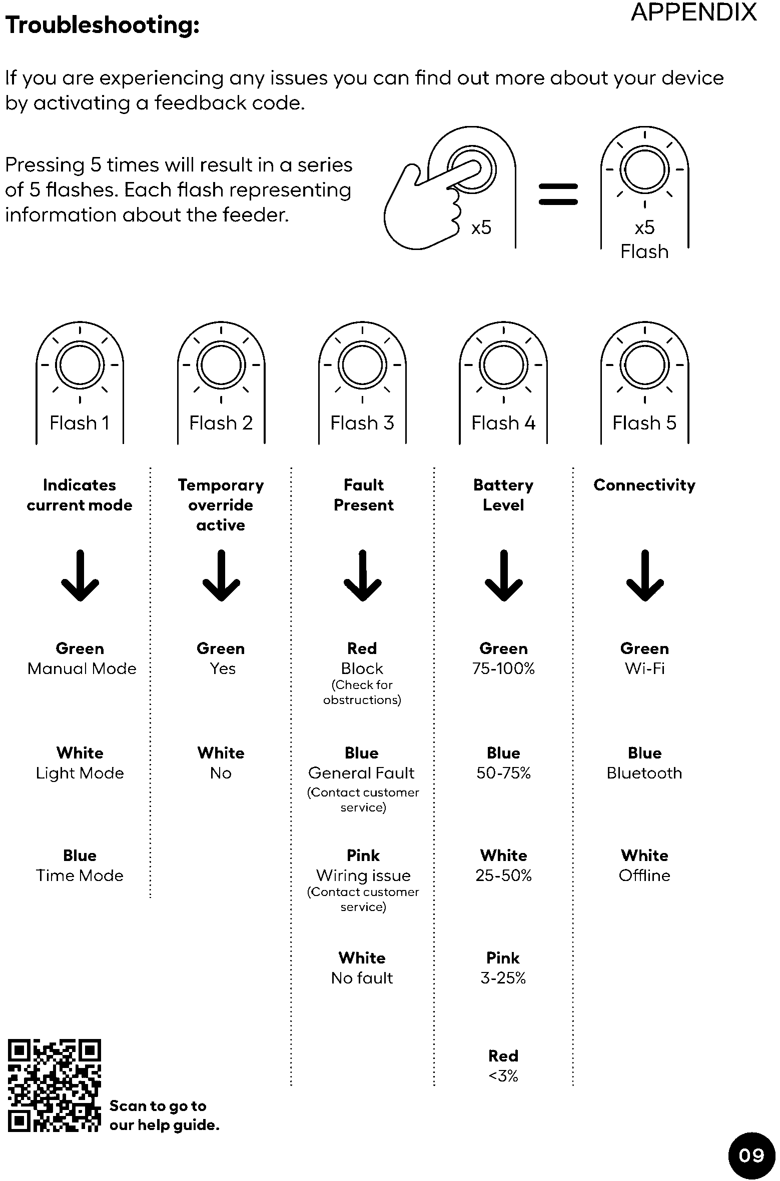

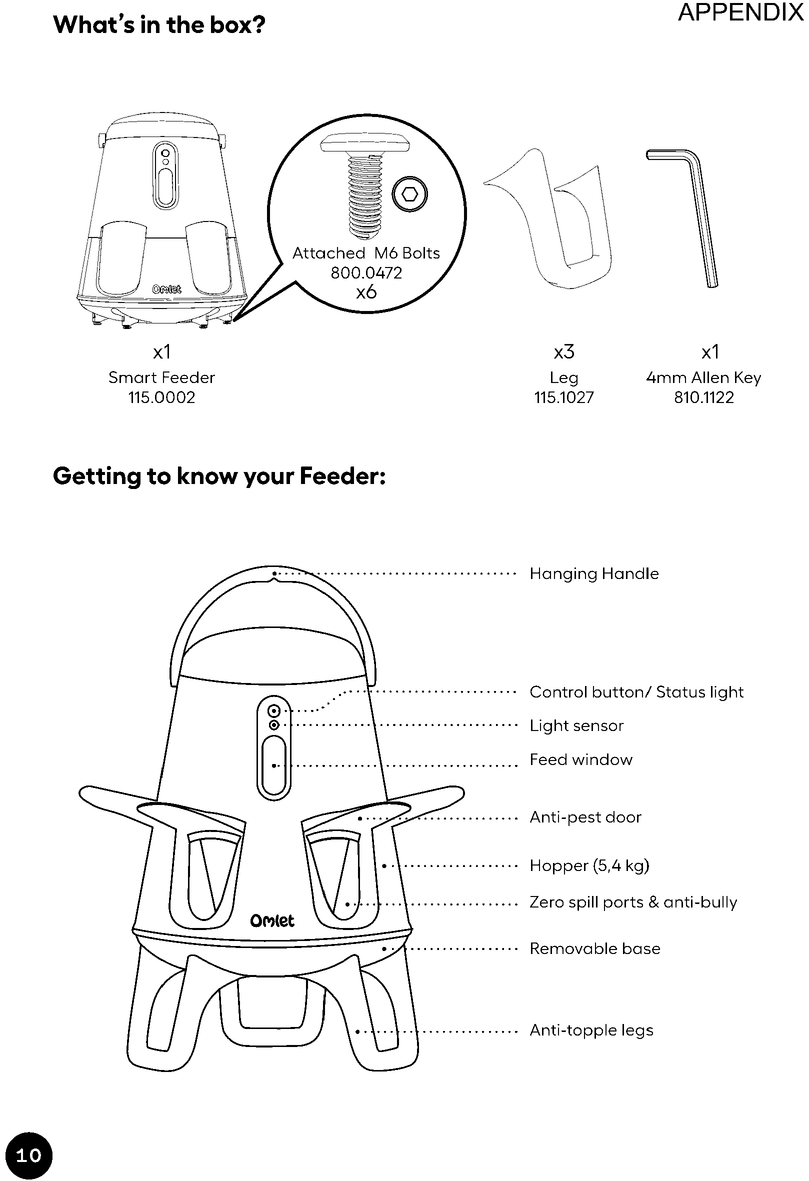

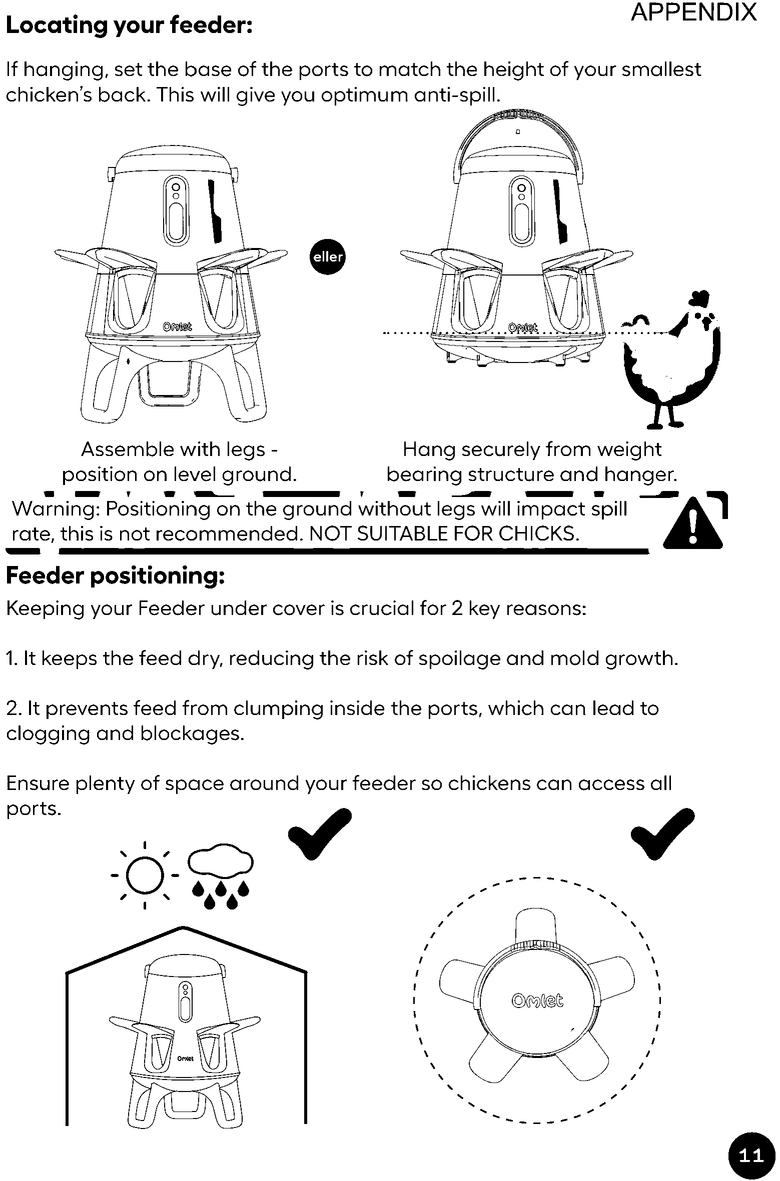

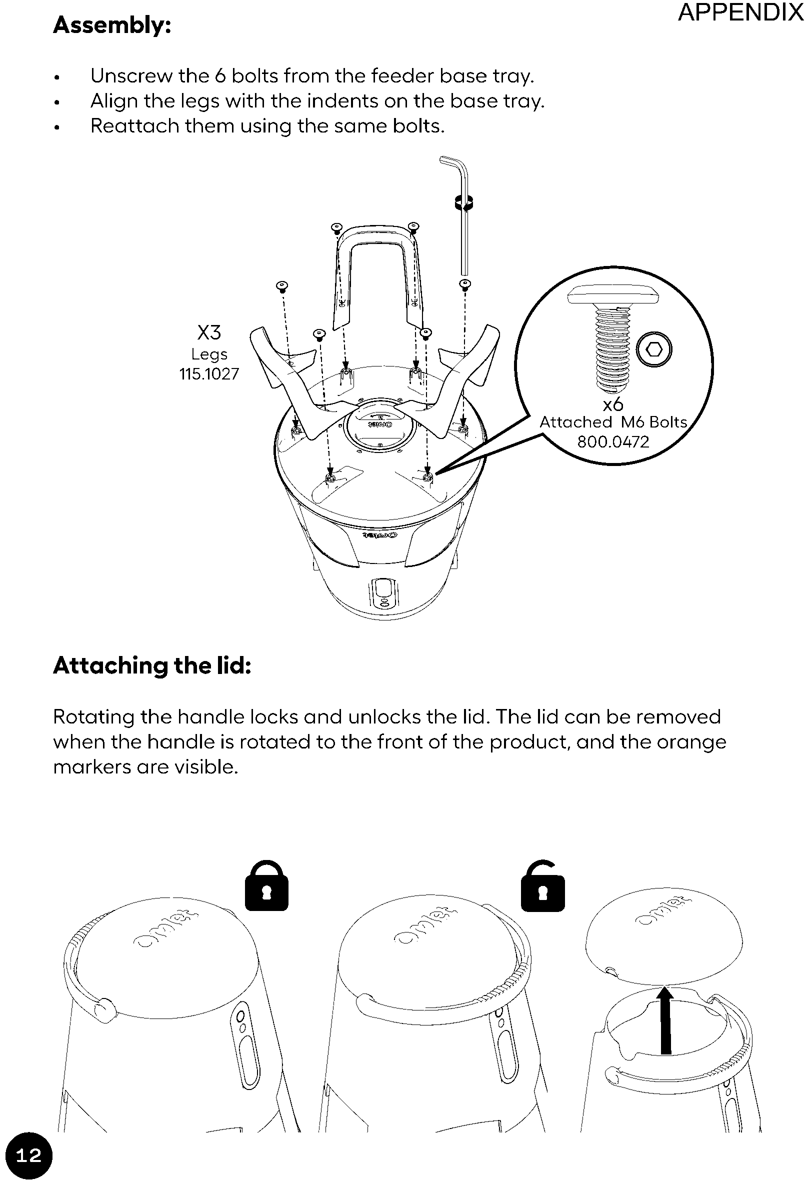

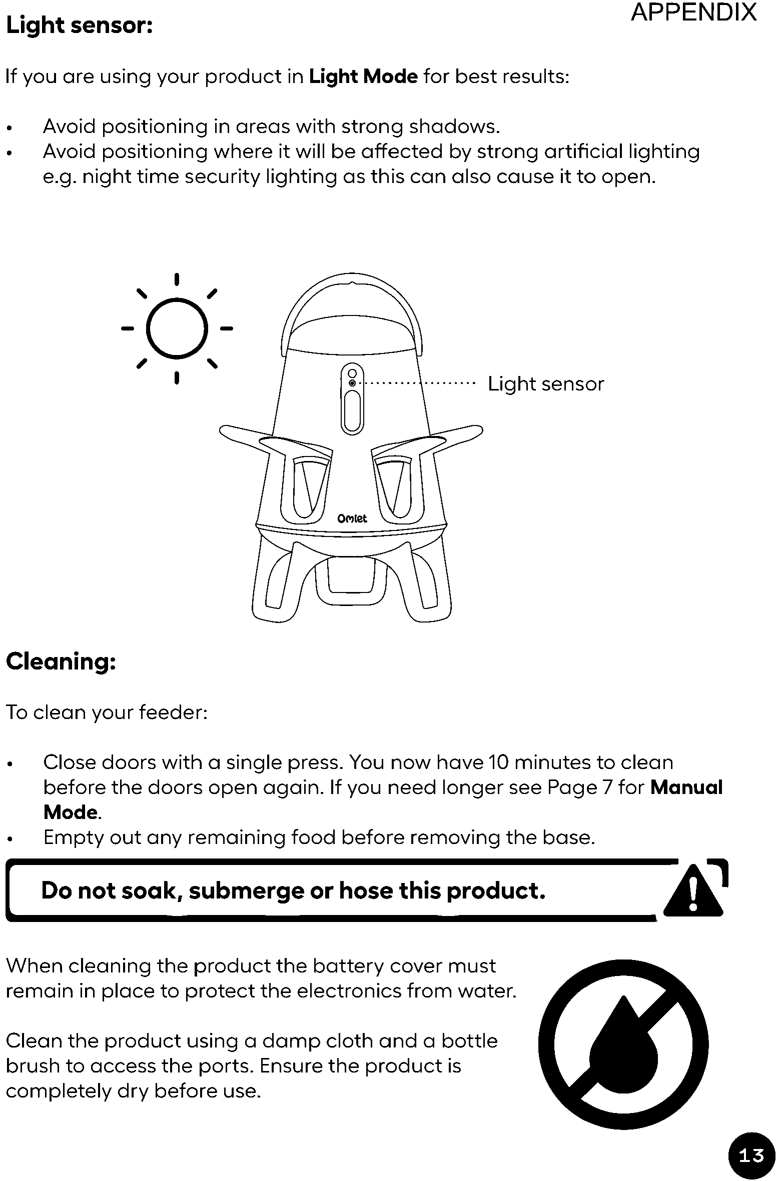

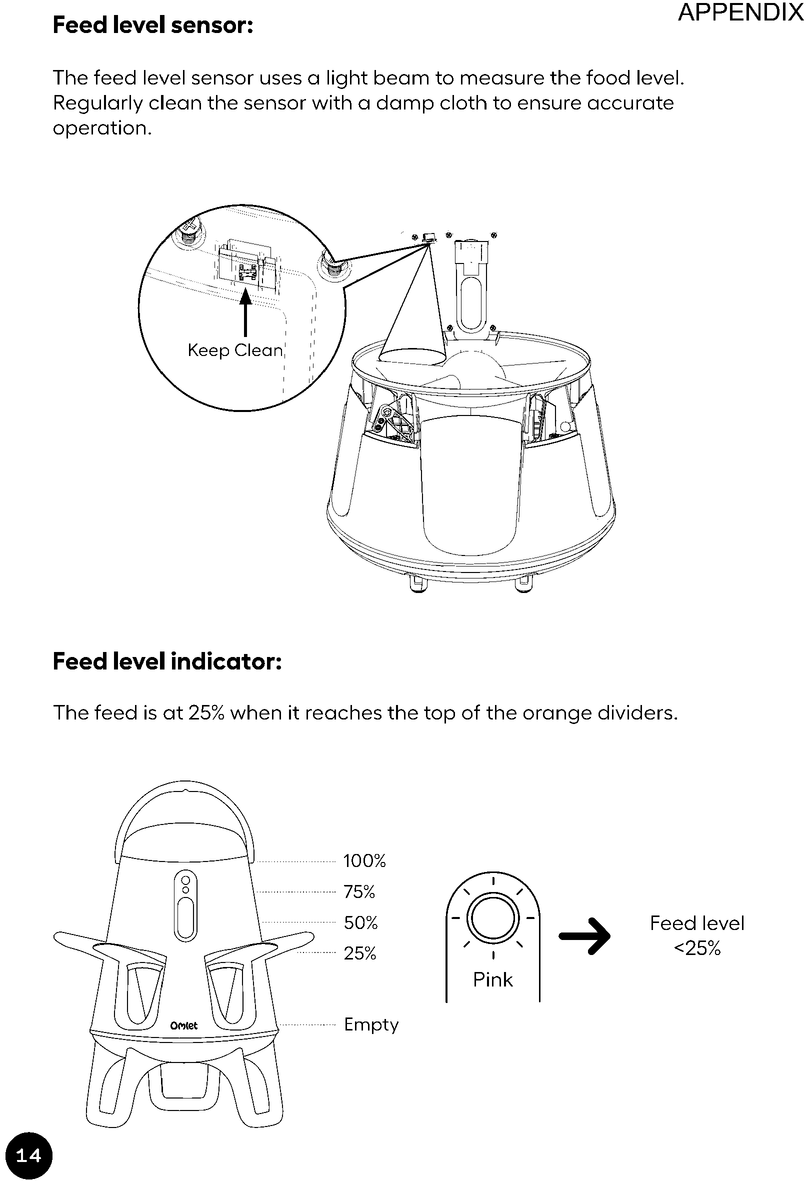

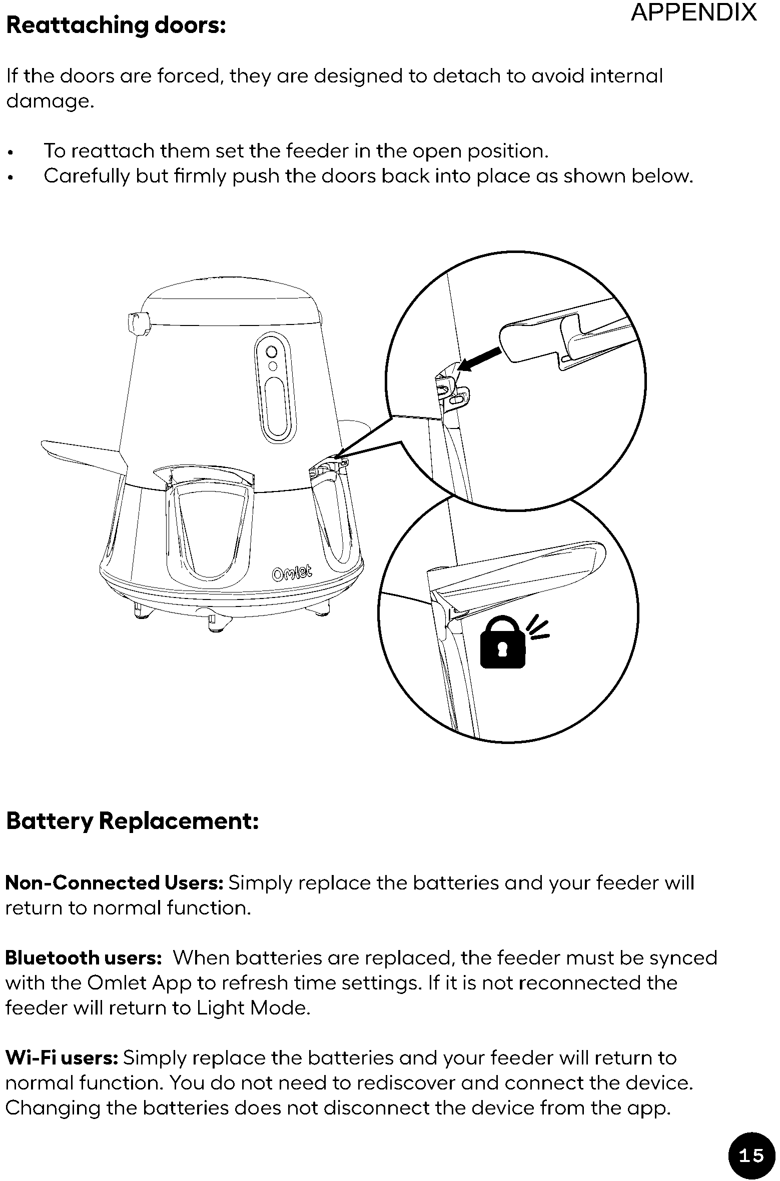

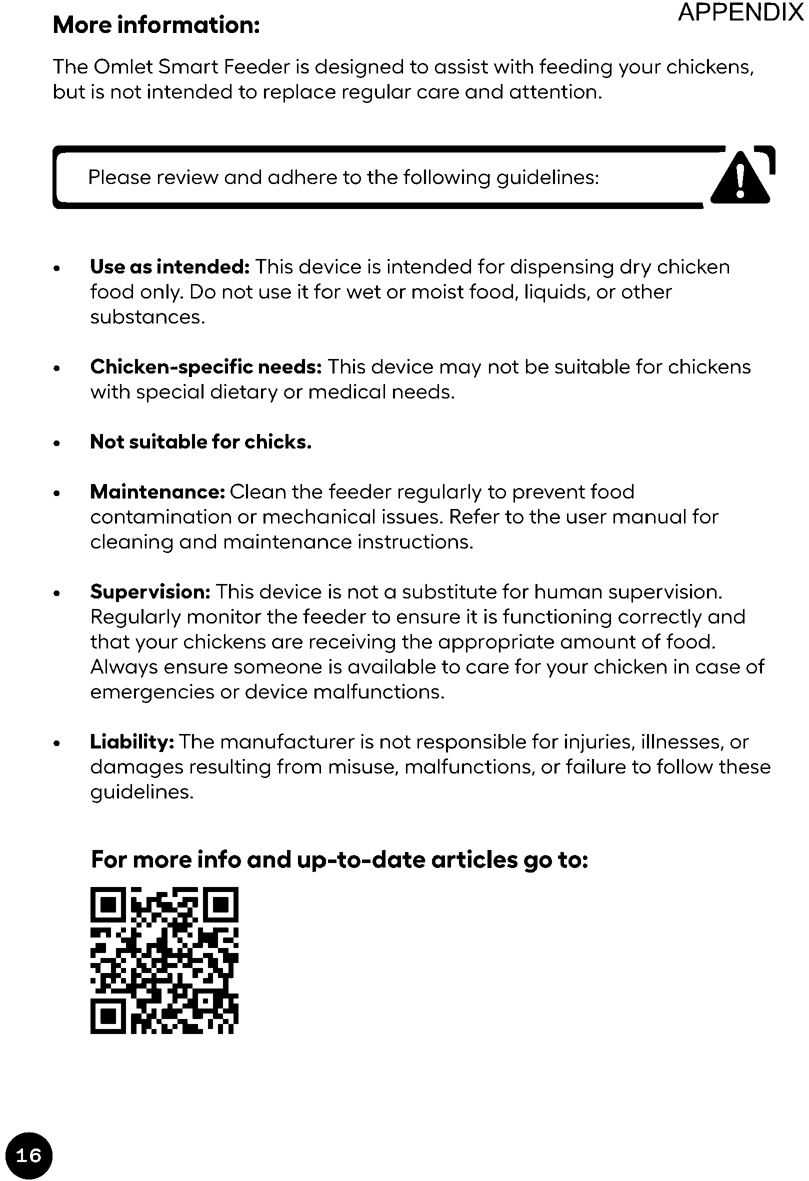

## Claims

1. A poultry feeder comprising:
a store for feed, said store comprising a feeding port for enabling poultry to access feed provided in said store, and a door moveable between a first position where said feeding port is open and a second position where the feeding port is closed by the door, the feeder further comprising a motor that is coupled to said door, and a control system operable to control the motor to move the door between said first and second positions to open and close the feeding port in the store.

2. A poultry feeder according to Claim 1, wherein the store comprises a plurality of feeding ports and a plurality of moveable doors, each said port being closable by a said door, said feeder further comprising an elevator linkage assembly coupling the motor to each of said plurality of moveable doors.

3. A poultry feeder according to Claim 2, wherein said control system is operable to control the motor to operate the elevator linkage assembly to move substantially simultaneously all of said plurality of doors between said first and second positions to open and close the feeding ports in the store.

4. A poultry feeder according to Claim 3, further comprising first and second limit switches that are each configured to signal the control system to cease operation of the motor if actuated.

5. A poultry feeder according to Claim 4, wherein said first limit switch is associated with a position of the elevator linkage assembly in which the doors coupled to the elevator linkage assembly are closed.

6. A poultry feeder according to Claim 4 or 5, wherein said second limit switch is associated with a position of the elevator linkage assembly in which the doors coupled to the elevator linkage assembly are open.

7. A poultry feeder according to any of Claims 2 to 6, wherein said elevator linkage assembly comprises a central hub and a plurality of arms, one for each said door, that extend radially outwardly from said central hub to form a spider-like body.

8. A poultry feeder according to Claim 7, wherein said motor is coupled to said elevator linkage assembly by means of a worm drive that can be driven by the motor to raise and lower the central hub of said elevator linkage assembly.

9. A poultry feeder according to Claim 7 or 8, wherein an end region of each arm remote from said central hub is pivotally coupled to a linkage that connects the arm to a said door.

10. A poultry feeder according to Claim 9, wherein each door comprises a door panel that is coupled to a mounting rib by a two-part frangible coupling, said mounting rib being pivotally coupled to the linkage that connects the door to the arm.

11. A poultry feeder according to any preceding claim, wherein said control system comprises a processor, and a communications interface for the receipt of instructions and/or the output of data, said processor being configured to execute software to control operation of the feeder.

12. A poultry feeder according to Claim 11, wherein said control system comprises a light sensor operable to generate light level signals representative of ambient light levels at the feeder's location.

13. A poultry feeder according to Claim 12, wherein said processor is operable to automatically control the motor to open the doors of the feeder at a desired ambient light level and to close the doors at a desired ambient light level based on light level signals received from the light sensor.

14. A poultry feeder according to any of Claims 11 to 13, wherein the processor is operable to automatically open/close the doors at any one or more of: preset times/days/dates, for preset time intervals, at preset light levels, in response to manual operation of a user interface, and in response to instructions received wirelessly from a computing device.

15. A poultry feeder according to any of Claims 11 to 14, further comprising a level sensor, such as an optical or sonic level sensor, that is operable to output level sensor signals that vary according to the amount of feed within the feeder, said processor being configured to receive said level sensor signals and, based on said level sensor signals, generate an indication of the amount of feed within the feeder.

16. A poultry feeder according to any of Claims 11 to 15, wherein the processor is configured to implement crush detector functionality to reduce the likelihood of poultry being caught in a closing door by monitoring a drive current drawn by the motor and ceasing operation of the motor to close the door in the event that the drive current should spike.

17. A poultry feeder according to any of Claims 2 to 16, wherein the feed store comprises a hopper for receiving a supply of feed, a funnel in fluid communication with the hopper for the receipt of feed from the hopper, and a base in which the funnel is located, the base co-operating with the funnel to define a plurality of feed areas, each said feed area being associated with and accessible via a said feeding port

18. A poultry feeder according to Claim 17, wherein:
distal end regions of the funnel in each said feed area that are proximate the base are flared in a radially outward direction to form an angular flange that extends away from the distal end region of the funnel towards the feeding port associated with that feed area, the flange being operable to obstruct poultry from reaching into the funnel to pull feed from within the funnel into said feed area, and/or
each said feeding port is defined in part by a radially inwardly extending cowl, a portion of the cowl that is lowermost in use forming a lip that extends inwardly towards the funnel, said lip being operable to obstruct poultry from raking feed from the feed area and out of the feeding port.
